(19) Europäisches Patentamt
European Patent Office
Office européen des brevets

(11) EP 2 125 950 B1

(12) # EUROPÄISCHE PATENTSCHRIFT

(45) Veröffentlichungstag und Bekanntmachung des Hinweises auf die Patenterteilung:
**02.01.2013 Patentblatt 2013/01**

(21) Anmeldenummer: **08716942.1**

(22) Anmeldetag: **19.02.2008**

(51) Int Cl.:
***C08L 25/12*** *(2006.01)* ***C08L 25/16*** *(2006.01)*
***C08L 29/04*** *(2006.01)* ***G11B 7/24*** *(2013.01)*

(86) Internationale Anmeldenummer:
**PCT/EP2008/051994**

(87) Internationale Veröffentlichungsnummer:
**WO 2008/104481 (04.09.2008 Gazette 2008/36)**

(54) **HARZZUSAMMENSETZUNG ZUR VERWENDUNG IN BLURAY DISCS**

RESIN COMPOSITION FOR USE IN BLU-RAY DISCS

COMPOSITION DE RÉSINE EMPLOYÉE DANS DES DISQUES BLU-RAY

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.02.2007 EP 07103223**

(43) Veröffentlichungstag der Anmeldung:
**02.12.2009 Patentblatt 2009/49**

(73) Patentinhaber: **Styrolution GmbH**
**60325 Frankfurt (DE)**

(72) Erfinder:
- **CHAROENSIRISOMBOON, Piyada**
  **68165 Mannheim (DE)**
- **LINK, Christoph**
  **67256 Weisenheim (DE)**
- **CUETOS, Ricardo**
  **Singapore 587906 (SG)**
- **KEHR, Günter**
  **67061 Ludwigshafen (DE)**
- **NIESSNER, Norbert**
  **Singapore 267773 (SG)**
- **PEPERS, Michel**
  **67071 Ludwigshafen (DE)**

(74) Vertreter: **Jacobi, Markus Alexander et al**
**Isenbruck Bösl Hörschler LLP**
**Patentanwälte**
**Eastsite One**
**Seckenheimer Landstraße 4**
**68163 Mannheim (DE)**

(56) Entgegenhaltungen:
**EP-A- 0 326 024** **EP-A- 0 337 187**
**WO-A-99/50348** **US-A1- 2006 210 758**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 125 950 B1

## Beschreibung

Die vorliegende Anmeldung betrifft eine Harzzusammensetzung, ein Medium zur optischen Aufzeichnung von Daten, enthaltend eine solche Harzzusammensetzung, die Verwendung einer Harzzusammensetzung zur Herstellung von Medien zum optischen Aufzeichnen von Daten und ein Verfahren zur Herstellung eines solchen Mediums.

Verfahren zum optischen Speichern von Daten, beispielsweise Bild-, Musik- oder Filmdaten, auf scheibenförmigen Medien, sind seit langem bekannt. Vorteil dieser Verfahren ist, dass große Mengen an Daten auf handlichen und preiswerten Datenträgern gespeichert werden können. Als Beispiele für solche Datenträger sind die Compactdisc, oder die DVD zu nennen, wobei diese Formate auch in wieder-beschreibbaren Ausführungsformen erhältlich sind.

Durch neue Technologien wie HDTV, HD-Video und Breitband-Internet werden Datenträger mit immer größerer Speicherkapazität notwendig. Ein solcher Datenträger mit sehr großer Speicherkapazität ist beispielsweise die BluRay Disc. Im Stand der Technik sind Verfahren zur Herstellung solcher Datenträger und Materialien für diese Datenträger vorgeschlagen worden.

WO 2006/003666 A2 offenbart optische Speichermedien mit einer Mehrschichtstruktur. Gemäß WO 2006/003666 A2 können solche optischen Mehrschicht-Datenträger aus nahezu allen bekannten polymeren Materialien erhalten werden. Beispielsweise sind genannt Polymethylmethacrylate, Polyacrylnitrile, Polybutadiene, Polyamide, Polyvinylalkohol, Polystyrole, Polyalkylstyrole u. a. Gemäß der genannten Schrift ist ein besonders bevorzugtes Material zur Herstellung der genannten optischen Speichermedien Polycarbonat. WO 2003/037983 A3 offenbart formgepresste optische Datenträger für die Aufnahme und Wiedergabe von Audio- und/oder optischen Daten wie beispielsweise CDs oder DVDs. Das dazu verwendete thermoplastische Polymermaterial umfasst 60 bis 95 Gew.-% eines Materials ausgewählt aus einem Methylmethacrylathomopolymer, einem Copolymer enthaltend Methylmethacrylatmonomere, eine Mischung eines Methylmethacrylathomopolymers und/oder einem Copolymer mit einem substituierten oder unsubstituierten Styrolcopolymer und wenigstens einem Monomer ausgewählt aus (Meth)acrylnitril, Maleinsäureanhydrid und Maleinsäureimide oder einem Glutarimidpolymer, welches optional mit einem substituierten oder unsubstituierten Styrolcopolymer vermischt sein kann, und 5 bis 40 Gew.-% wenigstens eines Stoßfestigkeitsverbesserers in Form von Partikeln mit einer durchschnittlichen Größe von 10 bis 200 nm.

WO 03/102110 A1 offenbart eine Polymerzusammensetzung umfassend ein thermoplastisches Harz oder ein Blend von thermoplastischen Harzen und einen Pfropfkautschuk umfassend eine Pfropfgrundlage, auf welche ein oder mehrere Monomere gepfropft worden sind. Gemäß WO 2003/102110 A1 sind geeignete thermoplastische Harze auswählbar aus einer großen Gruppe von Polymeren, umfassend Polycarbonate, Polyester, Polyolefine, Styrolpolymere und Styrolcopolymere, PVC, Polyamide u. a. WO 2003/102110 A1 offenbart keine Harzzusammensetzungen, welche zwei Pfropfkautschuke enthalten.

Aufgabe der vorliegenden Erfindung ist es, eine Harzzusammensetzung bereitzustellen, welche sich besonders dazu eignet, bei der Herstellung von Medien zur optischen Datenspeicherung verwendet zu werden. Dabei ist darauf zu achten, dass die erfindungsgemäße Harzzusammensetzung eine genügende mechanische Stabilität und Widerstandsfähigkeit aufweist. Dazu muss die Harzzusammensetzung alle Merkmale aufweisen, welche zur Speicherung und zum Wiedergeben von optisch gespeicherten Daten notwendig sind, beispielsweise geringe Aufnahme von Wasser, chemische Stabilität und gute elektrostatische Eigenschaften.

Diese Aufgaben werden gelöst durch eine Harzzusammensetzung, umfassend

(A) 60 bis 95 Gew.-% eines Copolymers enthaltend als Grundbausteine wenigstens ein $\alpha,\beta$-ungesättigtes Monocarbonsäurenitril und wenigstens ein aromatisches Vinylmonomer als Komponente (A),

(B) 5 bis 20 Gew.-% eines Pfropfkautschuks enthaltend eine Pfropfgrundlage b1 aufgebaut aus wenigstens einem $\alpha,\beta$-ungesättigten Monocarbonsäureester mit einer mittleren Teilchengröße von 50 bis 150 nm und mindestens eine Pfropfschale b2 aufgebaut aus wenigstens einem aromatischen Vinylmonomer und wenigstens einem $\alpha,\beta$-ungesättigten Monocarbonsäurenitril als Komponente (B),

(C) 2 bis 15 Gew.-% eines Pfropfkautschuks enthaltend eine Pfropfgrundlage c1 aufgebaut aus wenigstens einem $\alpha,\beta$-ungesättigten Monocarbonsäureester mit einer mittleren Teilchengröße von 300 bis 600 nm und mindestens eine Pfropfschale c2 aufgebaut aus wenigstens einem aromatischen Vinylpolymer und wenigstens einem $\alpha,\beta$-ungesättigten Monocarbonsäurenitril als Komponente (C) und

(D) 0 bis 10 Gew.% Additive als Komponente (D),

wobei die Summe der Mengen der Komponenten (A), (B), (C) und (D) 100 Gew.-% beträgt.

Im Folgenden werden die einzelnen Komponenten (A) bis (C) der erfindungsgemäßen Harzzusammensetzung näher beschrieben.

Im Rahmen der vorliegenden Erfindung bedeutet der Begriff Harzzusammensetzung eine Mischung der Copolymere (A), (B), (C) und gegebenenfalls weiterer Additive (D).

Komponente (A):

Als Komponente (A) umfasst die erfindungsgemäße Harzzusammensetzung 60 bis 95 Gew.-%, bevorzugt 68 bis 88 Gew.-%, besonders bevorzugt 75 bis 85 Gew.-% eines Copolymers enthaltend wenigstens ein $\alpha,\beta$-ungesättigtes Monocarbonsäurenitril und wenigstens ein aromatisches Vinylmonomer.

In der erfindungsgemäßen Harzzusammensetzung ist Komponente (A) die Hartkomponente, d.h. Komponente (A) weist einen höheren Härtegrad auf als die Komponenten (B) oder (C).

Geeignete $\alpha,\beta$-ungesättigte Monocarbonsäurenitrile sind ausgewählt aus der Gruppe bestehend aus Acrylnitril, Methacrylnitril und Mischungen davon.

Als geeignete aromatische Vinylmonomere in Komponente (A) können Verbindungen der allgemeinen Formel (I)

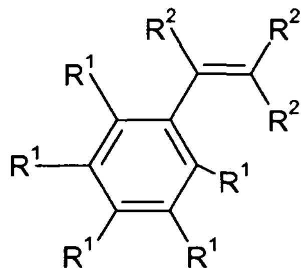

(I)

eingesetzt werden, wobei

$R^1$ unabhängig voneinander Wasserstoff, $C_1$-$C_{10}$-Alkyl, $C_1$-$C_{10}$-Cycloalkyl, $C_1$-$C_{10}$-Alkoxy, $C_6$-$C_{18}$-Aryl, $C_6$-$C_{18}$-Ar-Alkyl, $C_6$-$C_{18}$-Aryloxy, Chlor oder Brom und

$R^2$ unabhängig voneinander Wasserstoff, $C_1$-$C_{10}$-Alkyl, Chlor oder Brom bedeuten.

Bevorzugte aromatische Vinylmonomere der allgemeinen Formel (I) sind ausgewählt aus der Gruppe bestehend aus Styrol, 3-Methylstyrol, 3,5-Dimethylstyrol, 4-n-Propylstyrol, $\alpha$-Methylstyrol, $\alpha$-Methylvinyltoluol, $\alpha$-Chlorstyrol, $\alpha$-Bromstyrol, Dichlorstyrol, Dibromstyrol und Mischungen davon. Besonders bevorzugte aromatische Vinylmonomere sind Styrol und/oder $\alpha$-Methylstyrol.

Komponente (A) kann nach allen dem Fachmann bekannten Methoden erhalten werden, beispielsweise radikalische, anionische oder kationische Polymerisation. Bevorzugt wird Komponente (A) durch eine kontinuierliche oder nicht kontinuierliche Polymerisation in Substanz oder in Lösung erhalten. In einer bevorzugten Ausführungsform enthält die Polymerisationslösung als Lösungsmittel 0 bis 20 Gew.-% eines aromatischen Lösungsmittels, beispielsweise Toluol, Xylole oder Ethylbenzol. Komponente (A) kann nach einem Verfahren erhalten werden, wie es beispielsweise im Kunststoff-Handbuch, Vieweg-Daumiller, Band V, (Polystyrol), Carl-Hanser-Verlag, München 1969, Seiten 122 f. beschrieben wird. Die Hartkomponente (A) ist auch kommerziell erhältlich.

In einer bevorzugten Ausführungsform enthält Komponente (A) als $\alpha,\beta$-ungesättigtes Monocarbonsäurenitril Acrylnitril und als aromatisches Vinylmonomer $\alpha$-Methylstyrol.

Somit ist in einer besonders bevorzugten Ausführungsform Komponente (A) der erfindungsgemäßen Harzzusammensetzung ein AMSAN-Copolymer, welches aus Acrylnitril und $\alpha$-Methylstyrol aufgebaut ist. In diesem AMSAN-Copolymer liegt Acrylnitril in einem Anteil von 20 bis 40 Gew.-%, bevorzugt 25 bis 35 Gew.-% und $\alpha$-Methylstyrol in einem Anteil von 60 bis 80 Gew.-%, bevorzugt 65 bis 75 Gew.-% vor, wobei die Summe der Mengen der beiden Monomere 100 Gew.-% ergibt.

Bei den Messungen der Molekulargewichte wurden Polystyrol-Eichstandards eingesetzt. Es wurde eine 5*MixedB-Säule verwendet.

Die gewichtsmittlere Molekularmasse $M_w$ des als Komponente (A) eingesetzten Polymers beträgt bevorzugt 20000 bis 110000 g/mol, besonders bevorzugt 50000 bis 95000 g/mol, jeweils gemessen durch GPC mit UV-Detektion.

Die zahlenmittlere Molekularmasse $M_n$ des als Komponente (A) eingesetzten Polymers beträgt bevorzugt 10000 bis 40000 g/mol, besonders bevorzugt 20000 bis 35000 g/mol, jeweils gemessen durch GPC mit UV-Detektion.

Die Molekularmasse $M_p$ des als Komponente (A) eingesetzten Polymers beträgt bevorzugt 20000 bis 90000

g/mol, besonders bevorzugt 50000 bis 85000 g/mol, jeweils gemessen durch GPC mit UV-Detektion.

Die Polydispersität $M_w/M_n$ bezüglich der durch GPC mit UV-Detektion gemessenen Molekularmassen $M_w$ und $M_n$ beträgt bevorzugt 2,0 bis 3,5.

Die gewichtsmittlere Molekularmasse $M_w$ des als Komponente (A) eingesetzten Polymers beträgt bevorzugt 20.000 bis 80.000 g/mol, besonders bevorzugt 50.000 bis 70.000 g/mol, jeweils gemessen durch GPC mit RI (refractive index).

Die zahlenmittlere Molekularmasse $M_n$ des als Komponente (A) eingesetzten Polymers beträgt bevorzugt 10.000 bis 40.000 g/mol, besonders bevorzugt 20.000 bis 30.000 g/mol, jeweils gemessen durch GPC mit RI (refractive index).

Die Molekularmasse $M_p$ des als Komponente (A) eingesetzten Polymers beträgt bevorzugt 20.000 bis 80.000 g/mol, besonders bevorzugt 50.000 bis 70.000 g/mol, jeweils gemessen durch GPC mit RI (refractive index).

Die Polydispersität $M_w/M_n$ bezüglich der durch GPC mit RI (refractive index) gemessenen Molekularmassen $M_w$ und $M_n$ beträgt bevorzugt 2,0 bis 3,5.

Die Viskositätszahl (VZ) des als Komponente (A) eingesetzten Polymers beträgt in einer bevorzugten Ausführungsform, gemessen nach DIN 53726 bei 25 °C in einer 0,5 gew.-%igen Lösung in DMF, 40 bis 90 ml/g, besonders bevorzugt 50 bis 60 ml/g, ganz besonders bevorzugt 53 bis 58 ml/g.

Die Hartkomponente (A) ist kommerziell unter dem Namen Luran® KR 2556 von der BASF Aktiengesellschaft erhältlich.

Komponente (B):

Komponente (B) in der erfindungsgemäßen Harzzusammensetzung ist ein Pfropfkautschuk enthaltend eine Pfropfgrundlage b1 aufgebaut aus wenigstens einem $\alpha,\beta$-ungesättigten Monocarbonsäureester mit einer mittleren Teilchengröße von 50 bis 150 nm und mindestens eine Pfropfschale b2 aufgebaut aus wenigstens einem aromatischen Vinylmonomer und wenigstens einem $\alpha,\beta$-ungesättigten Monocarbonsäurenitril.

Als Komponente (B) umfasst die erfindungsgemäße Harzzusammensetzung 5 bis 20 Gew.-%, bevorzugt 7 bis 16 Gew.-%, besonders bevorzugt 10 bis 14 Gew.-% eines Pfropfkautschuks, welcher eine Propfgrundlage b1 und mindestens eine Pfropfschale b2 aufweist.

Die Pfropfgrundlage b1 ist aus wenigstens einem $\alpha,\beta$-ungesättigten Monocarbonsäureester aufgebaut und weist eine mittlere Teilchengröße von 50 bis 150 nm auf.

Der $\alpha,\beta$-ungesättigte Monocarbonsäureester ist abgeleitet von einer $\alpha,\beta$-ungesättigten Monocarbonsäure, ausgewählt aus der Gruppe bestehend aus Methacrylsäure, Acrylsäure und Mischungen davon. Um den $\alpha,\beta$-ungesättigten Monocarbonsäureester zu erhalten, wird die genannte $\alpha,\beta$-ungesättigte Monocarbonsäure mit einem Alkohol umgesetzt. Dieser Alkohol ist ein gesättigter oder ungesättigter aliphatischer Alkohol mit 1 bis 12 Kohlenstoffatomen. In einer bevorzugten Ausführungsform weist dieser Alkohol 1 bis 8, besonders bevorzugt 2 bis 6 Kohlenstoffatome auf. Die Alkoholkomponente des $\alpha,\beta$-ungesättigten Monocarbonsäureesters kann dabei linear oder verzweigt aufgebaut sein. In einer bevorzugten Ausführungsform ist der Alkoholrest des Esters linear aufgebaut. Als $C_1$-$C_{12}$-Alkylester der Acrylsäure eignen sich vor allem Ethylacrylat, 2-Ethylhexylacrylat und n-Butylacrylat. Bevorzugt sind 2-Ethylhexylacrylat und n-Butylacrylat, ganz besonders bevorzugt ist n-Butylacrylat. Es können auch Mischungen verschiedener Alkylacrylate verwendet werden, die sich in ihrem Alkylrest unterscheiden.

In einer besonders bevorzugten Ausführungsform ist der $\alpha,\beta$-ungesättigte Monocarbonsäureester Acrylsäure-n-butylester. Daher ist in einer bevorzugten Ausführungsform die Pfropfgrundlage b1 ein Polyacrylsäurebutylester. In einer weiteren bevorzugten Ausführungsform ist das als Pfropfgrundlage b1 eingesetzte Polyacrylsäurebutylester quervernetzt. Diese Quervernetzung kann durch alle dem Fachmann bekannte Verfahren durchgeführt werden, beispielsweise durch Zusatz von vernetzenden Monomeren. Solche Monomere sind bi- oder polyfunktionelle Comonomere mit mindestens zwei olefinischen Doppelbindungen, beispielsweise Butadien und Isopren, Divinylester von Dicarbonsäuren wie der Bernsteinsäure und Adipinsäure, Diallyl- und Divinylether bifunktioneller Alkohole wie des Ethylenglycols und des Butan-1,4-diols, Diester der Acrylsäure und Methacrylsäure mit den genannten bifunktionellen Alkoholen, 1,4-Divinylbenzol und Triallylcyanurat. Besonders bevorzugt sind der Acrylsäureester des Tricyclodecenylalkohol, siehe DE-OS 12 60 135), der unter dem Namen Dihydrodicyclopentadienylacrylat (DCPA) bekannt ist, sowie die Allylester der Acrylsäure und der Methacrylsäure.

Die in Komponente (B) eingesetzte Pfropfgrundlage b1 weist in einer bevorzugten Ausführungsform einen Quellungsindex von 5 bis 25, besonders bevorzugt 10 bis 18, ganz besonders bevorzugt 12 bis 16 auf. Der Quellungsindex ist ein Maß für die Quellbarkeit eines Polymers durch ein Lösungsmittel. Übliche Quellungsmittel sind beispielsweise Methyl-ethylketon oder Toluol. Die Bestimmung des Quellungsindex geschieht beispielsweise nach einem Verfahren, bei dem ca. 0,2 g des Feststoffes einer durch Verdampfen des Wassers verfilmten Pfropfgrundlagen-Dispersion in einer Menge von z.B. 50 g Toluol gequollen werden. Nach z.B. 24 Stunden wird das Toluol abgesaugt und die Probe ausgewogen. Nach dem Trocknen der Probe im Vakuum wird diese erneut ausgewogen. Der Quellungsindex ist das Verhältnis

der Auswaage nach dem Quellungsvorgang zu der Auswaage trocken nach der erneuten Trocknung.

Die in Komponente (B) eingesetzte Pfropfgrundlage b1 weist in einer weiteren bevorzugten Ausführungsform einen Gelgehalt von mehr als 80%, bevorzugt mehr als 90%, besonders bevorzugt mehr als 94% auf. Der Gelgehalt ist derjenige Produktgehalt, der vernetzt und damit in einem Lösungsmittel nichtlöslich ist. Der Gelgehaft wird vorzugsweise im gleichen Lösungsmittel wie der Quellungsindex bestimmt. Der Gelgehalt errechnet sich aus dem Verhältnis der Trockenauswaage nach dem Quellschritt zur Einwaage vor dem Quellschritt (x 100%).

Die in Komponente (B) vorliegende Pfropfgrundlage b1 hat im Allgemeinen eine mittlere Teilchengröße $d_{50}$ von 50 bis 150 nm, bevorzugt 60 bis 120 nm, besonders bevorzugt 70 bis 90 nm. Diese Teilchengrößen sind nach der Hydrodynamic-Fractionation-Methode (HDF) bestimmt. Bei der HDF-Messung erfolgt ein Fluss eines flüssigen Trägermaterials durch eine mit einem polymeren Trägermaterial befüllte Säule. Während kleine Partikel, die auch in kleinere Zwischenräume passen, mit einer geringen Fließgeschwindigkeit die Säule durchlaufen, werden Partikel mit größerem Durchmesser schneller transportiert. Am Ende der Säule erfolgt eine Bestimmung der Teilchengröße mittels eines UV-Detektors (bei einer Wellenlänge von 254 nm). Die zu untersuchenden Proben werden vorzugsweise auf eine Konzentration von 0,5 g/l des flüssigen Trägermaterials verdünnt, anschließend einem Filtrationsprozess unterzogen und dann auf die Säule gegeben. Handelsübliche HDF-Geräte werden beispielsweise von Polymer-Laboratories angeboten. Die angegebenen HDF-Werte beziehen sich auf die Volumenverteilung.

In dem als Komponente (B) eingesetzten Pfropfkautschuk liegt des weiteren mindestens eine Pfropfschale b2 aufgebaut aus wenigstens einem aromatischen Vinylmonomer und wenigstens einem $\alpha,\beta$-ungesättigten Monocarbonsäurenitril vor. Das wenigstens eine aromatische Vinylmonomer in der Pfropfschale b2 entspricht in einer bevorzugten Ausführungsform ebenfalls Verbindungen der allgemeinen Formel (I) mit den dort angegebenen Bedeutungen für $R^1$ und $R^2$. In einer besonders bevorzugten Ausführungsform ist das wenigstens eine aromatische Vinylmonomer in der Pfropfschale b2 ausgewählt aus Styrol, $\alpha$-Methylstyrol und Mischungen davon.

Das in der Pfropfschale b2 enthaltene $\alpha,\beta$-ungesättigte Monocarbonsäurenitril ist in einer bevorzugten Ausführungsform ausgewählt aus Acrylnitril oder Methacrylnitril oder Mischungen davon. Bevorzugt wird Acrylnitril verwendet.

Das Verhältnis von aromatischem Vinylpolymer zu $\alpha,\beta$-ungesättigtem Monocarbonsäurenitril beträgt in der Pfropfschale b2 bevorzugt 5:1 bis 1:1, besonders bevorzugt 4:1 bis 2:1, ganz besonders bevorzugt 3,5:1 bis 2,5:1.

In Komponente (B) liegt die Pfropfgrundlage b1 in einer Menge von 40 bis 80, bevorzugt 50 bis 70, besonders bevorzugt 60 Gew.-%, bezogen auf Komponente (B), vor. Die Pfropfschale b2 liegt in einer bevorzugten Ausführungsform in einer Menge von 20 bis 60, bevorzugt 30 bis 50, besonders bevorzugt 40 Gew.-%, jeweils bezogen auf Komponente (B) vor. Die Mengen von Pfropfgrundlage b1 und Pfropfschale b2 addieren sich jeweils zu 100 Gew.-%.

Somit wird in einer ganz besonders bevorzugten Ausführungsform als Komponente (B) ein Pfropfkautschuk eingesetzt, welcher als Pfropfgrundlage b1 einen quervernetzten Polyacrylsäurebutylester und als Pfropfschale b2, ein Copolymer aus Styrol und Acrylnitril aufweist. Die Pfropfschale b2 kann dabei teilweise oder auch vollständig auf die Pfropfgrundlage b1 aufgepfropft sein.

Verfahren zur Herstellung eines in der erfindungsgemäßen Harzzusammensetzung als Komponente (B) vorliegenden Pfropfkautschuks sind dem Fachmann bekannt.

Zur Herstellung des Pfropfpolymerisats (B) wird bevorzugt Kaliumperoxodisulfat als Radikalinitiator eingesetzt. Es kann auch Natrium- und/oder Ammoniumperoxodisulfat eingesetzt werden. Es ist auch möglich ein Redox-Initiatorsystem einzusetzen, insbesondere enthaltend ein organisches Peroxid sowie mindestens ein Reduktionsmittel.

Geeignete organische Peroxide sind ausgewählt aus der Gruppe: Di-tert.-butylperoxid, Cumolhydroperoxid, tert.-Butylhydroperoxid und p-Menthanhydroperoxid oder Gemischen hieraus. Als Reduktionsmittel wird in der Regel mindestens eine wasserlösliche Verbindung mit reduzierender Wirkung verwendet, ausgewählt aus der Gruppe: Salze von Sulfinsäure, Salze der schwefligen Säure, Natriumdithionit, Natriumsulfit, Natriumhyposulfit, Natriumhydrogensulfit, Ascorbinsäure sowie deren Salze, Rongalit C (Natriumformaldehydsulfoxylat), Mono- und Dihydroxyaceton, Zucker, Eisen(II)salze, Zinn(II)salze und Titan(III)salze.

In der Regel beträgt die Menge des eingesetzten Radikalinitiators, bezogen auf die Monomergesamtmenge, 0,01 bis 5 Gew.-%, bevorzugt 0,1 bis 3 Gew.-% und besonders bevorzugt 0,2 bis 1,5 Gew.-%.

Geeignete Herstellungsverfahren für die Pfropfcopolymerisate (B) sind zum Beispiel die Emulsionspolymerisation, Lösungspolymerisation, Suspensionspolymerisation oder Massepolymerisation, wobei die Pfropfcopolymerisate (B) vorzugsweise durch wässrige radikalische Emulsionspolymerisation hergestellt werden. Geeignete Polymerisationsverfahren werden unter anderem beschrieben in WO-A 2002/10222, DE-A 28 26 925 sowie in EP-A 022 200.

Zur Herstellung des Pfropfpolymerisats (B) kann eine Emulsionspolymerisation unter Verwendung eines Redox-Initiatorsystem enthaltend Cumolhydroperoxid, Dextrose sowie Eisen(II)salz oder unter Verwendung eines Peroxids, beispielsweise Kaliumperoxodisulfat, durchgeführt werden.

Die Herstellung der Pfropfgrundlage b1 kann beispielsweise durch radikalisch initiierte wässrige Emulsionspolymerisation erfolgen, indem eine Teilmenge der Monomeren in einem wässrigen Reaktionsmedium vorgelegt wird und die gegebenenfalls verbliebene Restmenge an Monomeren im wässrigen Reaktionsmedium nach Initiierung der

radikalischen Polymerisationsreaktion zugegeben wird. Es ist auch möglich, im wässrigen Reaktionsmedium wenigstens eine Teilmenge des radikalischen Polymerisationsinitiators und gegebenenfalls weiterer Hilfsstoffe vorzulegen, das erhaltene wässrige Reaktionsmedium auf Polymerisationstemperatur zu bringen und bei dieser Temperatur die Monomeren dem wässrigen Reaktionsmedium zuzufügen. Dabei kann die Zuführung auch in Form einer Mischung erfolgen, beispielsweise als wässrige Monomeremulsion.

In einer bevorzugten Ausführungsform der Erfindung wird als Radikalinitiator bei der Herstellung der Pfropfgrundlage b1 ein Peroxodisulfat, insbesondere Kaliumperoxodisulfat (KPS), in Verbindung mit weiteren Hilfskomponenten eingesetzt. Es können unter anderem ein Puffer (zum Beispiel Bicarbonat) und Kaliumstearat oder K30® als Seife zum Einsatz kommen.

Als Molekulargewichtsregler (MR) kann beispielsweise tertiär-Dodecylmercaptan (TDM) zum Einsatz kommen, welches kontinuierlich oder auch zu verschiedenen Zeitpunkten während des Herstellprozesses des Kautschuklatex zugegeben werden kann.

Die Art der Zugabe des Reglers kann sich auf die Eigenschaften des Endproduktes auswirken. In einer bevorzugten Ausführungsform wird kein Regler eingesetzt.

Im Rahmen des beschriebenen Polymerisationsverfahrens werden auch Dispergiermittel (DM) verwendet, die sowohl die Monomertröpfchen als auch die gebildeten Polymerisat-Teilchen im wässrigen Medium dispers verteilt halten und so die Stabilität der erzeugten wässrigen Polymerisatdispersion gewährleisten. Als Dispergiermittel (DM) kommen sowohl die zur Durchführung von radikalischen wässrigen Emulsionspolymerisationen üblicherweise eingesetzten Schutzkolloide als auch handelsübliche Emulgatoren in Betracht. Geeignete Schutzkolloide sind beispielsweise Polyvinylalkohole, Polyalkylenglykole, Alkalimetallsalze von Polyacrylsäuren und Polymethacrylsäuren und Gelatinederivate. Geeignete Schutzkolloide sind z.B. Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze.

Geeignete Schutzkolloide sind ferner auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, aminogruppentragende Acrylate, Methacrylate, Acrylamide und/oder Methacrylamide enthaltende Homo- und Copolymerisate. Eine ausführliche Beschreibung weiterer geeigneter Schutzkolloide findet sich auch in Houben-Weyl, "Methoden der organischen Chemie", Band XIV/1, Makromolekulare Stoffe, Georg-Thieme-Verlag, Stuttgart, 1961, Seiten 411 bis 420.

Es können auch Gemische aus Schutzkolloiden und/oder Emulgatoren eingesetzt werden. Häufig werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nicht-ionischer Natur sein. Im Falle der Verwendung von Gemischen grenzflächenaktiver Substanzen sollten die Einzelkomponenten miteinander verträglich sein. Im Allgemeinen sind anionische Emulgatoren untereinander und mit nicht-ionischen Emulgatoren verträglich.

Das gleiche gilt auch für kationische Emulgatoren, während anionische und kationische Emulgatoren meistens nicht miteinander kombiniert werden sollten. Eine Übersicht geeigneter Emulgatoren findet sich in Houben-Weyl, "Methoden der organischen Chemie", Band XIV/1, Makromolekulare Stoffe, Georg-Thieme-Verlag, Stuttgart, 1961, Seiten 192 bis 208. Erfindungsgemäß werden als Dispergiermittel insbesondere Emulgatoren eingesetzt wie anionische, kationische oder nicht-ionische Tenside. Gebräuchliche nicht-ionische Emulgatoren sind beispielsweise ethoxylierte Mono-, Di- und Trialkyl-phenole sowie ethoxylierte Fettalkohole. Übliche anionische Emulgatoren sind zum Beispiel Alkalimetall- und Ammoniumsalze von Alkylsulfaten (mit Alkylresten von $C_8$-$C_{12}$), von Schwefelsäure-halbestern ethoxylierter Alkanole (Alkylrest: $C_{12}$-$C_{18}$) und ethoxylierter Alkylphenole (Alkylreste: $C_4$-$C_{12}$) und von Alkylsulfonsäuren (Alkylrest: $C_{12}$-$C_{18}$).

Geeignete kationische Emulgatoren sind unter anderem $C_6$-$C_{18}$-Alkyl-, Alkylaryl- oder heterocyclische Reste aufweisende, primäre, sekundäre, tertiäre oder quartäre Ammoniumsalze, Pyridiniumsalze, Imidazoliniumsalze, Oxazoliniumsalze, Morpholiniumsalze, Tropyliumsalze, Sulfoniumsalze und Phosphoniumsalze. Beispielhafte Verbindungen sind u.a. Dodecylammoniumacetat oder das entsprechende Sulfat, Disulfate oder Acetate der verschiedenen 2-(N,N, N-Trimethylammonium)ethylparaffinsäureester, N-Cetylpyridiniumsulfat und N-Laurylpyridiniumsulfat. Die Emulgatoren und Schutzkolloide können auch als Mischungen eingesetzt werden.

Die als Dispergiermittel bevorzugt eingesetzten Emulgatoren werden vorteilhaft in einer Gesamtmenge von 0,005 bis 5 Gew.-%, vorzugsweise von 0,01 bis 5 Gew.-%, insbesondere von 0,1 bis 3 Gew.-%, jeweils bezogen auf die Monomer-Gesamtkonzentration, eingesetzt. Die Gesamtmenge der als Dispergiermittel zusätzlich oder statt der Emulgatoren eingesetzten Schutzkolloide beträgt oft 0,1 bis 10 Gew.-% und häufig 0,2 bis 7 Gew.-%, jeweils bezogen auf die Monomeren-Gesamtkonzentration. Bevorzugt werden jedoch anionische und/oder nicht-ionische Emulgatoren und insbesondere bevorzugt anionische Emulgatoren als Dispergiermittel eingesetzt.

Als weitere Polymerisationshilfsstoffe können die üblichen Puffersubstanzen (PS), durch welche pH-Werte von vorzugsweise 6 bis 11 eingestellt werden, wie Natriumbicarbonat und Natriumpyrophosphat, sowie 0 bis 3 Gew.-% eines Molekulargewichtsreglers (MR), wie z. B. Mercaptane, Terpinole oder dimeres $\alpha$-Methylstyrol, bei der Polymerisation verwendet werden. Die Puffersubstanzen können auch eine komplexierende Wirkung haben.

Die Reaktion der Polymerisation kann im Bereich von 0 bis 170°C durchgeführt werden. In der Regel werden Temperaturen zwischen 40 und 120°C, häufig zwischen 50 und 110°C und oft zwischen 60 und 100°C angewendet.

Optional kann die radikalisch initiierte wässrige Emulsionspolymerisation auch in Anwesenheit einer Polymersaat, beispielsweise in Anwesenheit von 0,01 bis 3 Gew.-%, häufig von 0,03 bis 2 Gew.-% und oft von 0,04 bis 1,5 Gew.-% einer Polymersaat, jeweils bezogen auf die Monomer-Gesamtmenge, erfolgen. Eine Polymersaat kann insbesondere dann eingesetzt werden, wenn die Teilchengröße der mittels radikalisch wässriger Emulsionspolymerisation herzustellenden Polymerpartikel gezielt eingestellt werden soll, wie es in US 2,520,959 und US 3,397,165 beschrieben wird.

Die auf die vorstehend beschriebene Weise hergestellten Polymere (b1) eignen sich als Pfropfgrundlage für die Herstellung der Pfropfcopolymere (B).

Eine wichtige Kenngröße für Pfropfcopolymere ist die Pfropfausbeute, wobei bei einer vollständigen Pfropfung die Pfropfausbeute 100 % beträgt. Für eine Reihe von Anwendungen sind Pfropfcopolymere mit möglichst hoher Pfropfausbeute von Vorteil, da diese nur geringe Mengen an freiem Polymerisat der Monomeren enthalten. Das nicht an den Kautschuk gebundene Polymerisat kann die physikalischen Eigenschaften des Copolymers negativ beeinflussen, was sich insbesondere in Mischungen mit weiteren Komponenten bemerkbar macht.

Die Pfropfhülle (b2) wird, gegebenenfalls nach Durchführung einer Agglomeration, durch ein Emulsionspolymerisationsverfahren erzeugt. Die Pfropfhülle (b2) wird gemäß einer Ausführungsform der Erfindung in Gegenwart des nach den oben beschriebenen Verfahren erhaltenen Pfropfkerns (b1) aus einem Monomergemisch, enthaltend die Komponenten Styrol, Acrylnitril und gegebenenfalls weitere Monomere polymerisiert. Dabei können die Monomere (und gegebenenfalls weitere Monomere) einzeln oder in Mischungen miteinander zugefügt werden. Beispielsweise kann man zunächst Styrol allein und danach eine Mischung aus Styrol und Acrylnitril aufpfropfen. Es ist vorteilhaft, diese Pfropfcopolymerisation wieder in wässriger Emulsion unter den üblichen, vorstehend beschriebenen Bedingungen durchzuführen, wobei sich der Einsatz eines Redox-Initiatorsystems bewährt hat.

Die Pfropfcopolymerisation zur Erzeugung der Pfropfhülle (b2) kann im gleichen System erfolgen wie die Emulsionspolymerisation zur Herstellung der Pfropfgrundlage (b1), wobei, falls nötig, weitere Emulgatoren sowie Hilfsstoffe zugegeben werden können. Das gemäß einer Ausführungsform der Erfindung aufzupfropfende Monomergemisch kann dem Reaktionsgemisch auf einmal, verteilt auf mehreren Stufen - beispielsweise zum Aufbau mehrerer Pfropfauflagen - oder kontinuierlich während der Polymerisation zugegeben werden. Vorzugsweise können die Monomere (insbesondere Styrol und Acrylnitril) gleichzeitig zugegeben werden.

Der Pfropfungsgrad (PG) ist die Menge der eingesetzten Pfropfmonomere (beispielsweise Menge an Styrol plus Menge an Acrylnitril) geteilt durch die Summe aus der Menge der Pfropfgrundlage (z.B. Menge an $\alpha,\beta$-ungesättigtem Monocarbonsäureester) und der Menge der eingesetzten Pfropfmonomere.

Die Pfropfcopolymerisation des Gemischs der in der Pfropfhülle vorhandenen Komponenten und gegebenenfalls weiterer Monomere in Gegenwart der Pfropfgrundlage (b1) wird so durchgeführt, dass ein Pfropfungsgrad von 10 bis 70 Gew.-%, vorzugsweise 20 bis 60 Gew.-%, insbesondere 30 bis 55 Gew.-% resultiert. Da die Pfropfausbeute (PA) in der Regel nicht 100% beträgt, ist der tatsächlich aufgepfropfte Teil der Polymere kleiner als die eingesetzte Menge. Daraus folgt, dass eine Menge an freien Polymeren entsteht. Die Steuerung der Pfropfausbeute bei der Pfropfpolymerisation kann unter anderem auch durch die Dosiergeschwindigkeit der Monomeren oder durch Initiator- und Reglerzugabe erfolgen. Beispielsweise führt eine größere Menge an eingesetztem Regler (z.B. Mercaptane) zu einer größeren Menge an freien Polymeren.

Zur Initiierung der Pfropf-Polymerisation können auch pfropfaktive und wasserlösliche Redox-Systeme eingesetzt werden. Beispielsweise kann man konventionelle wasserlösliche Starter wie z. B. Kaliumperoxodisulfat, Natriumperoxodisulfat, Ammoniumperoxodisulfat, Wasserstoffperoxid zusammen mit mindestens einem konventionellen Reduktionsmittel wie z. B. Natriumsulfit, Natriumdisulfit, Natriumhydrogensulfit, Natriumdithionit, Ascorbinsäure, Zucker oder das Natriumsalz der Hydroxymethansulfonsäure als Redox-System verwenden. Solche Redox-Systeme führen in vielen Fällen zu grobteiligeren Dispersionen. Besonders geeignete Redoxkatalysatoren mit hoher Pfropfaktivität sind wasserlösliche Startersysteme wie Redox-Systeme aus Wasserstoffperoxid und Schwermetallionen wie Cer-, Mangan- oder Eisen(II)salze, wie sie z.B. in Houben-Weyl, "Methoden der organischen Chemie", 4. Auflage, Band E 20, S. 2168, beschrieben werden. Besonders geeignet ist Kaliumperoxodisulfat.

Die Polymerisation kann so durchgeführt werden, dass das Schwermetallsalz des Redox-Systems wie z. B. das Eisen(II)salz dem Ansatz bereits vor der Polymerisation zugesetzt wird, während das Peroxid gleichzeitig mit den Monomeren, aber getrennt davon zudosiert wird. Das Eisen(II)salz wird beispielsweise in Konzentrationen von 1 bis 200 mg/l Fe-(II)-Ionen, bezogen auf die gesamte Dispersion, eingesetzt, wobei auch höhere und niedrigere Konzentrationen möglich sind.

Die Zuführung des Redox-initiatorsystems kann auf verschiedene Weisen erfolgen, beispielsweise durch portionsweise Zugabe wie in WO 2001/30901 oder in WO 2002/28931 beschrieben. Vorzugsweise wird das Oxidationsmittel Cumolhydroperoxid verwendet (ggf. in Mischung mit Cumol), wobei dieses insbesondere zum Teil kontinuierlich zugeführt und zum Teil als Portion (z. B. einmalig) zugegeben wird.

Zusätzlich zu den Redox-Initiatoren können konventionelle Starter wie öllösliche oder nur wenig wasserlösliche organische Peroxide oder Azo-Initiatoren Verwendung finden. Vorteile bietet beispielsweise die Zugabe weiterer Reduktionsmittel, die bevorzugt mit dem Eisensalz vor der Polymerisation vorgelegt werden. Als Reduktionsmittel kommen z. B. Natriumsulfat, Natriumdisulfit, Natriumhydrogensulfit, Natriumdithionit, Ascorbinsäure, reduzierende Zucker sowie das Natriumsalz der Hydroxymethansulfonsäure in Frage.

Das Molgewicht des aufgepfropften Polymeren kann zusätzlich eingestellt werden durch die Mitverwendung von Kettenüberträgern oder Molekulargewichtsreglern (MR) wie z. B. n-Dodecylmercaptan, t-Dodecylmercaptan, n-Butylmercaptan oder t-Butylmercaptan. Geeignet sind auch geruchsfreie Regler wie Terpinolene, siehe auch EP-A 1 191 044.

Die Polymerisation wird häufig bei pH-Werten von 2,5 bis 12, vorzugsweise bei pH-Werten von 8 bis 11 durchgeführt. Der pH-Wert kann vor oder während der Polymerisation mit üblichen Säuren wie Salzsäure, Schwefelsäure oder Essigsäure oder auch mit Basen wie Natronlauge, Kalilauge, Ammoniak oder Ammoniumcarbonat auf den gewünschten Wert eingestellt werden. Bevorzugt ist eine Einstellung des pH-Wertes der wässrigen Polymerdispersionen auf 7 bis 11 im Anschluss an die Polymerisation durch Zugabe von Natronlauge, Kalilauge oder Ammoniak.

Zwischen der Herstellung der Pfropfgrundlage (b1) und dem Aufbringen der Pfropfhülle (b2) kann ein Agglomerationsschritt durchgeführt werden, um die Teilchengrößen und Teilchengrößenverteilungen gezielt einzustellen. Verschiedene Verfahren zur teilweisen oder vollständigen Agglomeration der Pfropfgrundlage (b1) sind dem Fachmann bekannt, siehe z.B. EP-A 1 305 345, EP-A 029 613, EP-A 007 810, DE-A 12 33 131, DE-A 12 58 076 und DE-A 21 01 650. Die Agglomeration kann auch nach anderen dem Fachmann bekannten Methoden vorgenommen werden. Diese können einen erheblichen Einfluss auf die Qualität der Formmassen und auf die Kosten des Gesamtverfahrens haben.

Es können im Prinzip auch physikalische Agglomerationsverfahren wie Scher-Koagulation, Gefrier- oder Drukkagglomerationsverfahren verwendet werden, es werden aber in der Regel chemische Methoden eingesetzt. Zu letzteren gehört auch die Zugabe von Elektrolyten, beispielsweise Magnesiumsulfat, oder von anorganischen oder organischen Säuren.

In der zweiten Stufe kann der Kautschuklatex agglomeriert werden. Dies geschieht in der Regel durch Zugabe einer Dispersion eines Acrylesterpolymerisates. Vorzugsweise werden Dispersionen von Copolymerisaten von ($C_1$-$C_4$-Alkyl)-estern der Acrylsäure, vorzugsweise von Ethylacrylat, mit 0,1 bis 10 Gew.-% polare Polymerisate bildenden Monomeren, wie z.B. Acrylsäure, Methacrylsäure, Acrylamid oder Methacrylamid, N-Methylol-methacrylamid oder N-Vinylpyrrolidon, eingesetzt. Bevorzugt wird ein Copolymerisat aus 90 bis 96 Gew.-% Ethylacrylat und 4 bis 10 Gew.-% Methacrylamid verwendet. Die Agglomerierdispersion kann gegebenenfalls auch mehrere der genannten Acrylesterpolymerisate enthalten. Die Konzentration der Acrylesterpolymerisate in der zur Agglomeration verwendeten Dispersion soll im Allgemeinen zwischen 3 und 40 Gew.-% liegen.

Bei der Agglomeration werden in der Regel 0,2 bis 20, vorzugsweise 1 bis 5 Gew.-Teile der Agglomerierdispersion auf 100 Teile des Kautschuklatex, jeweils berechnet auf Feststoffe, eingesetzt. Die Agglomeration wird durch Zugabe der Agglomerierdispersion zum Kautschuk durchgeführt. Die Geschwindigkeit der Zugabe kann variiert werden, im Allgemeinen dauert sie etwa 1 bis 60 Minuten bei einer Temperatur zwischen 20° und 90° C, vorzugsweise zwischen 30° und 75° C.

Außer mittels einer Acrylesterpolymerisat-Dispersion kann der Kautschuklatex prinzipiell auch durch andere Agglomeriermittel wie z.B. Essigsäureanhydrid agglomeriert werden. Auch eine Agglomeration durch Druck oder Einfrieren ist möglich, jedoch wenig vorteilhaft. Die genannten Methoden sind dem Fachmann seit längerem bekannt. Unter den bislang beschriebenen Bedingungen wird jedoch häufig nur ein Teil der Kautschukteilchen agglomeriert, so dass eine bi- oder polymodale Verteilung entsteht.

Nach der Agglomeration liegen im Allgemeinen mehr als 40, vorzugsweise zwischen 51 und 70% der Teilchen (Zahlen-Verteilung) im agglomerierten Zustand vor. Der erhaltene Teil-agglomerierte Kautschuklatex ist verhältnismäßig stabil, so dass er ohne weiteres gelagert und transportiert werden kann, ohne dass Koagulation eintritt.

Für die Agglomeration von als Pfropfgrundlage dienenden Kautschukpartikeln eignet sich insbesondere eine copolymerisierbare, polyfunktionelle, agglomerierend wirkende Komponente, die mindestens ein Copolymerisat aus $C_1$- bis $C_{12}$-Alkylacrylaten oder $C_1$- bis $C_{12}$-Alkylmethacrylaten und polaren Comonomeren aus der Gruppe Acrylamid, Methylacrylamid, Ethylacrylamid, n-Butylacrylamid oder Maleinsäureamid enthält.

Als Agglomerationspolymerisate sind beispielsweise Polyethylenoxidpolymere, Polyvinylether oder Polyvinylalkohol bekannt. Auch geeignete als Agglomerisationspolymerisate sind Copolymere, die andere als die oben aufgeführten polaren Comonomere aufweisen. Zu den besonders geeigneten Agglomerationspolymerisaten zählen insbesondere die Copolymerisate aus $C_1$- bis $C_{12}$-Alkylacrylaten oder $C_1$- bis $C_{12}$-Alkylmethacrylaten und polaren Comonomeren wie Acrylamid, Methacrylamid, Ethacrylamid, n-Butylacrylamid oder Maleinsäureamid, siehe auch EP-A 1 305 345.

In einer bevorzugten Ausführungsform der vorliegenden Erfindung wird kein Agglomerierungsschritt durchgeführt.

Die Teilchen der Komponente (B) weisen nach Pfropfung bevorzugt eine mittlere Teilchengröße $d_{50}$ von 60 bis 200 nm, besonders bevorzugt 60 bis 170 nm, beispielsweise 84 nm auf. Bei der Angabe dieser mittleren Teilchengröße

(d) handelt es sich um das Gewichtsmittel der Teilchengröße, wie sie mittels einer analytischen Ultrazentrifuge entsprechend der Methode von W. Mächtle, S. Harding (Hrg.), Analytische Ultrazentrifuge (AUC) in Biochemistry and Polymer Science, Royal Society of Chemistry Cambridge, UK 1992, S. 1447 bis 1475, bestimmt werden kann. Die Ultrazentrifugenmessung liefert die integrale Massenverteilung des Teilchendurchmessers einer Probe. Hieraus lässt sich entnehmen, wie viel Gewichtsprozent der Teilchen einen Durchmesser gleich oder kleiner einer bestimmten Größe haben.

Komponente (C):

Komponente (C) in der erfindungsgemäßen Harzzusammensetzung ist ein Pfropfkautschuk enthaltend eine Pfropfgrundlage c1 aufgebaut aus wenigstens einem α,β-ungesättigten Monocarbonsäureester mit einer mittleren Teilchengröße von 300 bis 600 nm und mindestens eine Pfropfschale c2 aufgebaut aus wenigstens einem aromatischen Vinylmonomer und wenigstens einem α,β-ungesättigten Monocarbonsäurenitril.

Als Komponente (C) umfasst die erfindungsgemäße Harzzusammensetzung 2 bis 15 Gew.-%, bevorzugt 4 bis 12 Gew.-%, besonders bevorzugt 6 bis 10 Gew.-% eines Pfropfkautschuks, welcher eine Propfgrundlage c1 und mindestens eine Pfropfschale c2 aufweist.

Komponente (C) ist ein Pfropfkautschuk, welcher eine Pfropfgrundlage c1 aufgebaut aus wenigstens einem α,β-ungesättigten Monocarbonsäureester mit einer mittleren Teilchengröße von 300 bis 600 nm aufweist. Diese Teilchengrößen sind nach der Hydrodynamic-Fractionation-Methode (HDF) bestimmt. Bei der HDF-Messung erfolgt ein Fluss eines flüssigen Trägermaterials durch eine mit einem polymeren Trägermaterial befüllte Säule. Während kleine Partikel, die auch in kleinere Zwischenräume passen, mit einer geringen Fließgeschwindigkeit die Säule durchlaufen, werden Partikel mit größerem Durchmesser schneller transportiert. Am Ende der Säule erfolgt eine Bestimmung der Teilchengröße mittels eines UV-Detektors (bei einer Wellenlänge von 254 nm). Die zu untersuchenden Proben werden vorzugsweise auf eine Konzentration von 0,5 g/l des flüssigen Trägermaterials verdünnt, anschließend einem Filtrationsprozess unterzogen und dann auf die Säule gegeben. Handelsübliche HDF-Geräte werden beispielsweise von Polymer-Laboratories angeboten. Die angegebenen HDF-Werte beziehen sich auf die Volumenverteilung.

Der α,β-ungesättigte Monocarbonsäureester ist abgeleitet von einer α,β-ungesättigten Monocarbonsäure, ausgewählt aus der Gruppe bestehend aus Methacrylsäure, Acrylsäure und Mischungen davon. Um den α,β-ungesättigten Monocarbonsäureester zu erhalten, wird die genannte α,β-ungesättigte Monocarbonsäure mit einem Alkohol umgesetzt. Dieser Alkohol ist ein gesättigter oder ungesättigter aliphatischer Alkohol mit 1 bis 12 Kohlenstoffatomen. In einer bevorzugten Ausführungsform weist dieser Alkohol 1 bis 8, besonders bevorzugt 2 bis 6 Kohlenstoffatome auf. Die Alkoholkomponente des α,β-ungesättigten Monocarbonsäureesters kann dabei linear oder verzweigt aufgebaut sein. In einer bevorzugten Ausführungsform ist der Alkoholrest des Esters linear aufgebaut. Als $C_1$-$C_{12}$-Alkylester der Acrylsäure eignen sich vor allem Ethylacrylat, 2-Ethylhexylacrylat und n-Butylacrylat. Bevorzugt sind 2-Ethylhexylacrylat und n-Butylacrylat, ganz besonders bevorzugt ist n-Butylacrylat. Es können auch Mischungen verschiedener Alkylacrylate verwendet werden, die sich in ihrem Alkylrest unterscheiden.

In einer besonders bevorzugten Ausführungsform ist der α,β-ungesättigte Monocarbonsäureester Acrylsäurebutylester. Daher ist in einer bevorzugten Ausführungsform die Pfropfgrundlage c1 ein Polyacrylsäurebutylester. In einer weiteren bevorzugten Ausführungsform ist das als Pfropfgrundlage b1 eingesetzte Polyacrylsäurebutylester quervernetzt. Diese Quervernetzung kann durch alle dem Fachmann bekannte Verfahren durchgeführt werden, beispielsweise durch Zusatz von vernetzenden Monomeren. Solche Monomere sind bi- oder polyfunktionelle Comonomere mit mindestens zwei olefinischen Doppelbindungen, beispielsweise Butadien und Isopren, Divinylester von Dicarbonsäuren wie der Bernsteinsäure und Adipinsäure, Diallyl- und Divinylether bifunktioneller Alkohole wie des Ethylenglycols und des Butan-1,4-diols, Diester der Acrylsäure und Methacrylsäure mit den genannten bifunktionellen Alkoholen, 1,4-Divinylbenzol und Triallylcyanurat. Besonders bevorzugt sind der Acrylsäureester des Tricyclodecenylalkohol, siehe DE-OS 12 60 135), der unter dem Namen Dihydrodicyclopentadienylacrylat (DCPA) bekannt ist, sowie die Allylester der Acrylsäure und der Methacrylsäure.

Die in Komponente (C) eingesetzte Pfropfgrundlage c1 weist in einer bevorzugten Ausführungsform einen Quellungsindex von 5 bis 25, besonders bevorzugt 7 bis 18, ganz besonders bevorzugt 8 bis 12 auf. Der Quellungsindex ist ein Maß für die Quellbarkeit eines Polymers durch ein Lösungsmittel. Übliche Quellungsmittel sind beispielsweise Methyl-ethylketon oder Toluol. Die Bestimmung des Quellungsindex geschieht beispielsweise nach einem Verfahren, bei dem ca. 0,2 g des Feststoffes einer durch Verdampfen des Wassers verfilmten Pfropfgrundlagen-Dispersion in einer Menge von z.B. 50 g Toluol gequollen werden. Nach z.B. 24 Stunden wird das Toluol abgesaugt und die Probe ausgewogen. Nach dem trocknen der Probe im Vakuum wird diese erneut ausgewogen. Der Quellungsindex ist das Verhältnis der Auswaage nach dem Quellungsvorgang zu der Auswaage trocken nach der erneuten Trocknung.

Die in Komponente (C) eingesetzte Pfropfgrundlage c1 weist in einer weiteren bevorzugten Ausführungsform einen Gelgehalt von mehr als 80%, besonders bevorzugt mehr als 90%, besonders bevorzugt mehr als 94% auf. Der Gelgehalt ist derjenige Produktgehalt, der vernetzt und damit in einem bestimmten Lösungsmittel nichtlöslich ist. Der

Gelgehalt wird vorzugsweise im gleichen Lösungsmittel wie der Quellungsindex bestimmt. Der Gelgehalt errechnet sich aus dem Verhältnis der Trockenauswaage nach dem Quellschritt zur Einwaage vor dem Quellschritt (x 100%).

Die in Komponente (C) vorliegende Pfropfgrundlage c1 hat im Allgemeinen eine mittlere Teilchengröße von 300 bis 600 nm, bevorzugt 350 bis 580 nm, besonders bevorzugt 400 bis 560 nm. Diese Teilchengrößen sind nach der Hydrodynamic-Fractionation-Methode (HDF) bestimmt.

In dem als Komponente (C) eingesetzten Pfropfkautschuk liegt des weiteren mindestens eine Pfropfschale c2 aufgebaut aus wenigstens einem aromatischen Vinylmonomer und wenigstens einem α,β-ungesättigten Monocarbonsäurenitril vor. Das wenigstens eine aromatische Vinylmonomer in der Pfropfschale c2 entspricht in einer bevorzugten Ausführungsform ebenfalls Verbindungen der allgemeinen Formel (I) mit den dort angegebenen Bedeutungen für $R^1$ und $R^2$. In einer besonders bevorzugten Ausführungsform ist das wenigstens eine aromatische Vinylmonomer in der Pfropfschale c2 ausgewählt aus Styrol, α-Methylstyrol und Mischungen davon.

Das in der Pfropfschale c2 enthaltene α,β-ungesättigte Monocarbonsäurenitril ist in einer bevorzugten Ausführungsform ausgewählt aus Acrylnitril oder Methacrylnitril oder Mischungen davon. Bevorzugt wird Acrylnitril verwendet.

In Komponente (C) liegt die Pfropfgrundlage c1 in einer Menge von 40 bis 80, bevorzugt 50 bis 70, besonders bevorzugt 60 Gew.-%, bezogen auf Komponente (C), vor. Die Pfropfschale c2 liegt in einer bevorzugten Ausführungsform in einer Menge von 20 bis 60, bevorzugt 30 bis 50, besonders bevorzugt 40 Gew.-%, jeweils bezogen auf Komponente (C) vor. Die Mengen von Pfropfgrundlage c1 und Pfropfschale c2 addieren sich jeweils zu 100 Gew.-%.

Das Verhältnis von aromatischem Vinylpolymer zu α,β-ungesättigtem Monocarbonsäurenitril beträgt in der Pfropfschale c2 bevorzugt 8:1 bis 2:1, besonders bevorzugt 6:1 bis 4:1, ganz besonders bevorzugt 5,5:1 bis 4,5:1.

Somit wird in einer ganz besonders bevorzugten Ausführungsform als Komponente (C) ein Pfropfkautschuk eingesetzt, welcher als Pfropfgrundlage c1 einen quervernetzten Polyacrylsäurebutylester und als Pfropfschale c2, ein Copolymer aus Styrol und Acrylnitril aufweist. Die Pfropfschale c2 kann dabei teilweise oder auch vollständig auf die Pfropfgrundlage c1 aufgepfropft sein.

Verfahren zur Herstellung eines in der erfindungsgemäßen Harzzusammensetzung als Komponente (C) vorliegenden Pfropfkautschuks sind dem Fachmann bekannt und sind bereits bezüglich der Komponente (B) der erfindungsgemäßen Formmasse beschrieben

In einer weiteren bevorzugten Ausführungsform wird Komponente (C) erhalten, indem die Pfropfgrundlage c1 vorgelegt wird, und die in der Pfropfschale enthaltenen Monomere zugegeben und polymerisiert werden. In einer besonders bevorzugten Ausführungsform wird dabei mehr als 30%, bevorzugt aber nicht mehr als 50% des aromatischen Vinylpolymers, bezogen auf die Gesamtmenge an aromatischem Vinylpolymer, zugegeben, bevor mit der Zugabe des α,β-ungesättigten Monocarbonsäurenitrils begonnen wird.

Die Teilchen der Komponente (C) weisen nach Pfropfung bevorzugt eine mittlere Teilchengröße $d_{50}$ von 400 bis 700 nm, besonders bevorzugt 500 bis 600 nm, beispielsweise 557 nm auf. Bei der Angabe dieser mittleren Teilchengröße (d) handelt es sich um das Gewichtsmittel der Teilchengröße, wie sie mittels einer analytischen Ultrazentrifuge entsprechend der Methode von W. Mächtle, S. Harding (Hrg.), Analytische Ultrazentrifuge (AUC) in Biochemistry and Polymer Science, Royal Society of Chemistry Cambridge, UK 1992, S. 1447 bis 1475, bestimmt werden kann. Die Ultrazentrifugenmessung liefert die integrale Massenverteilung des Teilchendurchmessers einer Probe. Hieraus lässt sich entnehmen, wie viel Gewichtsprozent der Teilchen einen Durchmesser gleich oder kleiner einer bestimmten Größe haben.

In einer bevorzugten Ausführungsform der erfindungsgemäßen Harzzusammensetzung ist in Komponenten (B) und (C) der α,β-ungesättigten Monocarbonsäureester ein Acrylsäure- oder Methacrylsäurealkylester abgeleitet von einem Alkohol mit 1 bis 8 Kohlenstoffatomen.

In einer weiteren bevorzugten Ausführungsform der erfindungsgemäßen Harzzusammensetzung ist in Komponenten (B) und (C) das aromatische Vinylmonomer Styrol.

In einer weiteren Ausführungsform der erfindungsgemäßen Harzzusammensetzung ist in Komponenten (B) und (C) das α,β-ungesättigte Monocarbonsäurenitril Acrylnitril.

In einer weiteren bevorzugten Ausführungsform der erfindungsgemäßen Harzzusammensetzung liegen Komponente (A) zu 68 bis 88 Gew.-%, Komponente (B) zu 7 bis 16 Gew.-% und Komponente (C) zu 4 bis 12 Gew.-% vor, wobei die Summe der Mengen der Komponenten (A) bis (C) 100 Gew.-% beträgt.

Die Komponenten (A), (B) und (C) können nach allen dem Fachmann bekannten Verfahren vermischt werden, beispielsweise mittels Extrusion oder Kompoundierung.

Der Pfropfkautschuk (C) kann vor dem Vermischen koaguliert werden, indem wie bereits zu Komponente (B) beschreiben vorgegangen wird.

Die koagulierten Pfropfkautschuke (B) und (C) werden gegebenenfalls einem Zentrifugierschritt unterworfen, so dass der Wassergehalt auf 60 bis 95 Gew.-% gesenkt wird. In einer weiteren Ausführungsform werden die nassen Pfropfkautschuke (B) und (C) getrocknet, bevor sie dem Extruder zugeführt werden. Geeignete Methoden zum Trocknen entsprechender Pfropfkautschuke sind dem Fachmann bekannt. Es ist jedoch auch möglich, dass die nassen Pfropfkautschuke (B) und (C) direkt dem Extruder zugeführt werden, um sie mit der Hartkomponente (A) zu vermischen. In

diesem Fall wird das Wasser während des Extrusionsschrittes entfernt.

In einer besonders bevorzugten Ausführungsform der erfindungsgemäßen Formmasse weist die Kombination der Komponenten (B) und (C) eine bimodale Teilchengrößenverteilung bezüglich der Pfropfgrundlagen b1 bzw. c1 auf, d.h. wenn man die Teilchengrößenverteilung bezüglich b1 und c1 über die Mischung von (B) und (C) betrachtet, so liegen zwei Maxima vor.

Komponente (D):

Die erfindungsgemäße Harzzusammensetzung weist als Komponente (D) 0 bis 10 Gew.-%, bevorzugt 0 bis 6 Gew.-%, besonders bevorzugt 0 bis 3 Gew.-% Additive auf. Sind in der erfindungsgemäßen Harzzusammensetzung Additive als Komponente (D) vorhanden, so liegen diese bevorzugt in einer Menge von 0,5 bis 6 Gew.-%, besonders bevorzugt in einer Menge von 0,5 bis 1,5 Gew.-% vor.

Als Additive (D) kommen alle solche Substanzen in Betracht, die üblicherweise zur Verarbeitung oder Ausrüstung der Polymere zum Einsatz kommen.

Genannt seien beispielsweise Farbstoffe, Pigmente, Färbemittel, Antistatika, Antioxidantien, Stabilisatoren zur Verbesserung der Thermostabilität, Stabilisatoren zur Erhöhung der Lichtstabilität, Stabilisatoren zum Anheben der Hydrolysebeständigkeit und der Chemikalienbeständigkeit, Mittel gegen die Wärmezersetzung und insbesondere Schmier-/Gleitmittel, die für die Herstellung von Formkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Hinsichtlich weiterer üblicher Hilfs- und Zusatzstoffe wird z.B. auf "Plastics Additives Handbook", Ed. Gächter and Müller, 4th edition, Hanser Publ., Munich, 1996, verwiesen.

Geeignete Pigmente sind beispielsweise Titandioxid, Phthalocyanine, Ultramarinblau, Eisenoxide oder Ruß, sowie die gesamte Klasse der organischen Pigmente.

Geeignete Färbemittel sind z.B. alle, die zur transparenten, halbtransparenten oder nichttransparenten Einfärbung von Polymeren verwendet werden können, insbesondere solche, die zur Einfärbung von Styrolcopolymeren geeignet sind, ausgewählt aus Farbstoffen, Pigmenten und Spezialeffekt-Pigmenten.

Als geeignete Flammschutzmittel können z.B. die dem Fachmann bekannten halogenhaltigen oder phosphorhaltigen Verbindungen, Magnesiumhydroxid, sowie andere gebräuchliche Verbindungen, oder deren Mischungen verwendet werden.

Geeignete Antioxidantien sind z. B. sterisch gehinderte einkernige oder mehrkernige phenolische Antioxidantien, die auf verschiedene Weise substituiert und auch über Substituenten verbrückt sein können. Hierzu zählen neben monomeren auch oligomere Verbindungen, die aus mehreren phenolischen Grundkörpern aufgebaut sein können. Ferner kommen Hydrochinone und Hydrochinon-analoge, substituierte Verbindungen in Betracht, ebenso Antioxidantien auf Basis von Tocopherolen und deren Derivaten. Auch Mischungen verschiedener Antioxidantien können verwendet werden. Prinzipiell können alle handelsüblichen oder für Styrolcopolymere geeigneten Verbindungen eingesetzt werden, z.B. Irganox®. Zusammen mit den zuvor beispielhaft genannten phenolischen Antioxidantien können so genannte Co-Stabilisatoren mitverwendet werden, insbesondere Phosphor- oder Schwefelhaltige Co-Stabilisatoren. Solche P- oder S-haltigen Co-Stabilisatoren sind dem Fachmann bekannt. Bevorzugte Wärmestabilisatoren (Antioxidantien) sind substituierte Thiophenole, beispielsweise 4,4'-Thio-bis-(6-t-butyl-3-methyl-phenol).

Geeignete Stabilisatoren gegen Lichteinwirkung sind z.B. verschiedene substituierte Resorcine, Salicylate, Benzotriazole und Benzophenone. Als Mattierungsmittel kommen sowohl anorganische Stoffe wie Talkum, Glaskugeln oder Metallcarbonate (wie z. B. $MgCO_3$, $CaCO_3$) in Betracht, als auch Polymerpartikel - insbesondere sphärische Partikel mit Durchmessern $d_{50}$ (Gewichtsmittel) über 1 mm - auf Basis von z.B. Methylmethacrylat, Styrolverbindungen, Acrylnitril oder deren Mischungen. Ferner kann man auch Polymere verwenden, die saure und/oder basische Monomere einpolymerisiert enthalten.

Geeignete Anti-Tropfmittel sind beispielsweise Polytetrafluorethylen (Teflon)-Polymere und ultrahochmolekulares Polystyrol (Molmasse $M_w$ über 2 000 000).

Als Beispiele für faserförmige bzw. pulverförmige Füllstoffe seien Kohlenstoff- oder Glasfasern in Form von Glasgeweben, Glasmatten oder Glasseidenrovings, Schnittglas, Glaskugeln sowie Wollastonit genannt, besonders bevorzugt Glasfasern. Bei der Verwendung von Glasfasern können diese zur besseren Verträglichkeit mit den Blendkomponenten mit einer Schlichte und einem Haftvermittler ausgerüstet sein.

Die Einarbeitung der Glasfasern kann sowohl in Form von Kurzglasfasern als auch in Form von Endlossträngen (Rovings) erfolgen.

Als teilchenförmige Füllstoffe eignen sich z. B. Ruß, amorphe Kieselsäure, Magnesiumcarbonat (Kreide), gepulverter Quarz, Glimmer, Mica, Bentonite, Talkum, Feldspat oder insbesondere Calciumsilikate wie Wollastonit und Kaolin.

Geeignete Antistatika sind beispielsweise Aminderivate wie N,N-Bis(hydroxyalkyl)alkylamine oder -alkylenamine, Polyethylenglycolester, Copolymere aus Ethylenoxidglycol und Propylenoxid (insbesondere Zweiblock- oder Dreiblockcopolymere aus Ethylenoxid- und Propylenoxid-Blöcken), und Glycerinmono- und -distearate, sowie deren Mischungen.

Geeignete Stabilisatoren sind beispielsweise gehinderte Phenole, aber auch Vitamin E bzw. analog dazu aufgebaute Verbindungen, wie auch butylierte Kondensationsprodukte von p-Kresol und Dicyclopentadien. Auch HALS-Stabilisatoren (Hindered Amine Light Stabilizers), Benzophenone, Resorcine, Salicylate, Benzotriazole sind geeignet. Andere geeignete Verbindungen sind zum Beispiel Thiocarbonsäureester. Einsetzbar sind auch $C_6$-$C_{20}$-Fettsäureester der Thiopropionsäure, besonders die Stearylester und Laurylester. Man kann auch Thiodipropionsäuredilaurylester (Dilaurylthiodipropionat), Thiodipropionsäuredisterarylester (Distearylthiodipropionat) oder deren Mischungen verwenden. Weitere Additive sind beispielsweise HALS-Absorber, wie Bis(2,2,6,6-tetramethyl-4-piperidyl)sebazat) oder UV-Absorber wie 2H-Benzotriazol-2-yl-(4-methyphenol). Derartige Additive werden üblicherweise in Mengen von 0,01 bis zu 2 Gew.-% (bezogen auf das Gesamtgemisch) verwendet.

Geeignete Gleit- und Entformungsmittel sind Stearinsäuren, Stearylalkohol, Stearinsäureester, Amidwachse (Bisstearylamid), Polyolefinwachse bzw. allgemein höhere Fettsäuren, deren Derivate und entsprechende Fettsäuregemische mit 12 bis 30 Kohlenstoffatomen. Auch Ethylen-bis-stearamid (z. B. Irgawax, Hersteller Ciba, Schweiz) ist besonders geeignet. Die Mengen dieser Zusätze liegen im Bereich von 0,05 bis 5 Gew.-%.

Auch Silikonöle, oligomeres Isobutylen oder ähnliche Stoffe kommen als Additive in Betracht. Die üblichen Mengen, falls verwendet, betragen von 0,001 bis 3 Gew.-%. Auch Pigmente, Farbstoffe, Farbaufheller, wie Ultramarinblau, Phthalocyanine, Titandioxid, Cadmiumsulfide, Derivate der Perylentetracarbonsäure sind verwendbar. Verarbeitungshilfsmittel und Stabilisatoren wie UV-Stabilisatoren, Wärmestabilisatoren (z. B. butylierte Reaktionsprodukte von p-Cresol und Dicyclopentadien; Wingstay L; - Hersteller: Goodyear; oder aber Thiodipropionsäuredilaurylester, Irganox, Hersteller: Ciba), Schmiermittel und Antistatika (z. B. Ethylenoxid-Propylenoxid-Copolymere wie Pluronic (Hersteller: BASF)) werden, falls eingesetzt, üblicherweise in Mengen von 0,01 bis 5 Gew.-% verwendet, bezogen auf die gesamte Formmasse.

Das Mischen der Komponenten (A, (B), (C) und gegebenenfalls (D) kann nach jeder beliebigen Weise nach allen bekannten Methoden erfolgen. Vorzugsweise erfolgt jedoch das Abmischen der Komponenten durch gemeinsames Compounding, Extrudieren, Kneten oder Verwalzen der Komponenten, z.B. bei Temperaturen im Bereich von 180 bis 400 °C, wobei die Komponenten, sofern erforderlich, zuvor aus der bei der Polymerisation erhaltenen Lösung oder wässrigen Dispersion isoliert werden. Die in wässriger Dispersion erhaltenen Produkte der Pfropfcopolymerisation können z.B mit Magnesiumsulfat ausgefällt werden. Sie können vorzugsweise nur teilweise entwässert werden und als feuchte Krümel (beispielsweise mit einer Restfeuchte von 1 bis 40 %, insbesondere 20 bis 40 %) mit den Matrix-Polymeren vermischt werden, wobei dann während des Vermischens die vollständige Trocknung der Pfropfcopolymerisate erfolgt. Die Trocknung der Partikel kann auch gemäß DE-A 19907136 erfolgen.

Die vorliegende Erfindung betrifft auch ein Medium zur optischen Aufzeichnung von Daten, welches eine erfindungsgemäße Harzzusammensetzung enthält.

Medien zur optischen Aufzeichnung von Daten sind beispielsweise CDs, DVDs, CD-R, CD-RW oder BluRay Discs. In einer bevorzugten Ausführungsform betrifft die vorliegende Erfindung eine BluRay Disc, welche die erfindungsgemäße Harzzusammensetzung enthält. Diese Medien können noch weitere Schichten zur Beschriftung oder zum Schutz aufweisen. Die BluRay Disc besteht in einer bevorzugten Ausführungsform aus dem Substrat oder Trägermaterial aus der efindungsgemäßen Harzzusammensetzung und einzelnen oder mehreren Reflektions-, Schreib- und/oder Schutzschichten sowie einer Deckschicht. Die Deckschicht kann speziell zur Verbesserung der Kratzfestigkeit und/oder Verschmutzungsempfindlichkeit modifiziert sein sowie mit weiteren Beschichtungen versehen werden. Die BluRay Disc kann auch mit einer Schutzfolie zum Beispiel durch Verkleben versehen werden.

In die Harzzusammensetzung bzw. eine daraus hergestellte Disc können auch chemische, optische, magnetische oder elektronische Substanzen, Komponenten, Vorrichtungen oder Bauteile zum Fälschungs-, Daten- und/oder Kopierschutz integriert werden, beispielsweise chemische Tracersubstanzen, magnetische Datenträger, Mikrochips oder RFID Chips.

Des Weiteren betrifft die vorliegende Erfindung die Verwendung der erfindungsgemäßen Harzzusammensetzung zur Herstellung von Medien zur optischen Aufzeichnung von Daten.

Des Weiteren betrifft die vorliegende Erfindung ein Verfahren zur Herstellung eines Mediums zur optischen Aufzeichnung von Daten, wobei eine erfindungsgemäße Harzzusammensetzung zu einem solchen Medium geformt wird. Das Verformen von Harzzusammensetzungen zu entsprechenden Formteilen ist dem Fachmann bekannt. Beispielsweise kann die erfindungsgemäße Harzzusammensetzung durch Spritzgießverfahren, Spritzprägeverfahren, Pressverfahren oder durch Extrusion mit anschließendem Stanzen und/oder Pressen bei erhöhter Temperatur in die entsprechenden Formteile geformt werden.

Die erfindungsgemäße Harzzusammensetzung weist besonders gute mechanische und elektrostatische Eigenschaften auf. Des Weiteren zeigen Formkörper hergestellt aus der erfindungsgemäßen Harzzusammensetzung eine sehr geringe Wasseraufnahme. Die erfindungsgemäße Harzzusammensetzung weist eine gute Chemikalienbeständigkeit auf, was Vorteile bei der Herstellung durch Beständigkeit gegenüber Lösungsmittel und Chemikalien im Beschichtungsprozess und beim Gebrauch gegenüber Hautfett, Reinigungsmitteln u.ä. ergibt. Gegenstände, die aus der efindunsgemäßen Harzzusammensetzung hergestellt sind, weisen eine hohe Kratzfestigkeit auf. Dies ergibt Vorteile im Gebrauch und minimiert die Neigung zum Verschleiß. Des Weiteren haben aus der erfindungsgemäßen Harzzusammensetzung hergestellte Gegenstände eine hohe Steifigkeit, was aufgrund der geringen Durchbiegung ebenfalls Vorteile im Gebrauch ergibt. Daher ist erfindungsgemäße Harzzusammensetzung besonders gut für die Herstellung von BluRay Discs geeignet.

Beispiele:

Nachfolgend werden die zur Charakterisierung der Polymere eingesetzten Untersuchungsmethoden kurz zusammengefasst:

a) Charpy-Kerbschlagzähigkeit (ak) [kJ/m$^2$]:

Die Kerbschlagzähigkeit wird ermittelt an Probekörpern (80 x 10 x 4 mm, hergestellt nach ISO 294 in einem Familienwerkzeug, bei einer Massetemperatur von 240 °C und einer Werkzeugtemperatur von 60 °C), bei 23 °C bzw. -30 °C nach ISO 179-2/1 eA (F) oder ISO 179-2/1eU.

b) Fließfähigkeit (MVR [cm$^3$/10 min]):

Die Fließfähigkeit wird ermittelt an einer Polymerschmelze bei 220 °C und 10 kg Belastung nach ISO 1133 B.

c) Elastizität (E-Modul [MPa]):

Die Elastizität wird an Prüfkörpern (hergestellt nach ISO 294 bei einer Massetemperatur von 240 °C und einer Werkzeugtemperatur von 60 °C) geprüft nach ISO 527-2/1A/50.

d) Teilchengröße:

Bei der Angabe der mittleren Teilchengröße (d) handelt es sich um das Gewichtsmittel der Teilchengröße, wie sie mittels einer analytischen Ultrazentrifuge entsprechend der Methode von W. Mächtle, S. Harding (Hrg.), Analytische Ultrazentrifuge (AUC) in Biochemistry and Polymer Science, Royal Society of Chemistry Cambridge, UK 1992, S. 1447 bis 1475, bestimmt werden kann. Die Ultrazentrifugenmessung liefert die integrale Massenverteilung des Teilchendurchmessers einer Probe. Hieraus lässt sich entnehmen, wie viel Gewichtsprozent der Teilchen einen Durchmesser gleich oder kleiner einer bestimmten Größe haben.

Die Bestimmung der Teilchengröße kann auch durch Hydrodynamic Fractionation (HDF) erfolgen. Bei der HDF-Messung erfolgt ein Fluss eines flüssigen Trägermaterials durch eine mit einem polymeren Trägermaterial befüllten Säule. Während kleine Partikel, die auch in kleinere Zwischenräume passen, mit einer geringen Fließgeschwindigkeit die Säule durchlaufen, werden Partikel mit größerem Durchmesser schneller transportiert. Am Ende der Säule erfolgt eine Bestimmung der Teilchengröße mittels eines UV-Detektors (bei einer Wellenlänge von 254 nm). Die zu untersuchenden Proben werden vorzugsweise auf eine Konzentration von 0,5 g/l des flüssigen Trägermaterials verdünnt, anschließend einem Filtrationsprozess unterzogen und dann auf die Säule gegeben. Handelsübliche HDF-Geräte werden beispielsweise von Polymer-Laboratories angeboten. Die angegebenen HDF-Werte beziehen sich auf die Volumenverteilung.

Der gewichtsmittlere Teilchendurchmesser $d_{50}$ gibt denjenigen Teilchendurchmesser an, bei dem 50 Gew.-% aller Teilchen einen größeren und 50 Gew.-% einen kleineren Teilchendurchmesser aufweisen.

e) Quellungsindex und Gelgehalt [%]:

Aus der wässrigen Dispersion der Pfropfgrundlage wurde durch Verdampfen des Wassers ein Film hergestellt. 0,2 g dieses Films wurden mit 50 g Toluol versetzt. Nach 24 Stunden wurde das Toluol von der aufgequollenen Probe abgesaugt und die Probe ausgewogen. Nach 16 Stunden Trocknen der Probe im Vakuum bei 110 °C wurde erneut ausgewogen.

Es wurden berechnet:

$$\text{Quellungindex QI} = \frac{\text{Masse der aufgequollenen, abgesaugten Probe}}{\text{Masse der im Vakuum getrockneten Probe}}$$

$$\text{Gelgehalt} = \frac{\text{Masse der im Vakuum getrockneten Probe}}{\text{Einwaage der Probe vor der Quellung}} \bullet 100\%$$

f) Viskosität

Die Viskositätszahl ($V_Z$) wird nach DIN 53726 an einer 0,5 %igen Lösung des Polymers in DMF bestimmt.

g) Vernetzungszustand

Eine Methode zur Charakterisierung des Vernetzungszustandes von Polymeren ist die Messung von NMR-Relaxationszeiten der beweglichen Protonen, die sog. $T_2$- Zeiten. Je stärker vernetzt ein bestimmtes Polymer ist, desto niedriger liegen seine $T_2$-Zeiten.

Übliche $T_2$-Zeiten für die erfindungsgemäßen Pfropfgrundlagen sind $T_2$-Zeiten im Bereich 1 bis 50 ms, bevorzugt 2,5 bis 40 ms und besonders bevorzugt 2,5 bis 30 ms, jeweils gemessen an verfilmten Proben bei 80°C.

Die Bestimmung der $T_2$-Zeit geschieht durch Messen der NMR-Relaxation einer entwässerten und verfilmten Probe der Pfropfgrundlagendispersion. Hierzu wird beispielsweise die Probe nach Ablüften über Nacht im Vakuum getrocknet und dann mit einem geeigneten Messgerät vermessen. Vergleichbar sind nur Proben, die nach der gleichen Methode vermessen wurden, da die Relaxation stark temperaturabhängig ist. Die bei einer Protonenresonanzfrequenz von 20 MHz und einer Temperatur von 140°C gemessene effektive transversale Relaxationszeit der Materialien liegt im Bereich zwischen 1 und 50 ms. Zur Bestimmung der Relaxationszeiten wird eine aus einem Festkörperecho und mehreren Spinecho-Messungen zusammengesetzte Magnetisierungsabfallkurve benutzt. Als effektive Relaxationszeit wird die Zeit angesetzt, nach der die Magnetisierungsabfallkurve auf einen Faktor 1/e gegenüber der mittels des Festkörper-Echos bestimmten Ausgangsamplitude abgefallen ist.

h) Durchstoß (multi-axiale Zähigkeit) [Nm]:

Der Durchstoß wird an Plättchen (60 x 60 x 2 mm, hergestellt nach ISO 294 in einem Familienwerkzeug, bei einer Massetemperatur von 240 °C und einer Werkzeugtemperatur von 50 °C), nach ISO 6603-2 ermittelt.

Beispiel 1

Komponente (A): 80,9 Gew.-% der Hartkomponente (A) bestehend aus 30 Gew.-% Acrylnitril und 70 Gew.-% $\alpha$-Methylstyrol.

Komponente (B): 12 Gew.-% eines Pfropfkautschukes (B) umfassend 60 Gew.-% eines quervernetzten Polyacrylsäurebutylesters als Pfropfgrundlage b1 mit einer mittleren Teilchengröße von 80 nm, einem Aufquellindex von 14 und einem Gelgehalt von über 94%, und 40 Gew.-% einer Pfropfschale b2 erhältlich durch die Polymerisation von 75 Gew.-% Styrol und 25 Gew.-% Acrylnitril, jeweils bezogen auf die Pfropfschale b2, in Gegenwart der Pfropfgrundlage b1.

Komponente (C): 7,1 Gew.-% einer Pfropfgrundlage c1 umfassend 60 Gew.-% eines quervernetzten Polyacrylsäurebutylesters mit einer mittleren Teilchengröße von 465 nm, einem Aufquellindex von 10 und einem Gelgehalt von über 94% und 40 Gew.-% einer Pfropfschale c2 erhältlich durch Polymerisation von 83 Gew.-% Styrol und 17 Gew.-% Acrylonitril, jeweils bezogen auf die Pfropfschale c2, in der Art, dass 13 Teile des Styrols zugegeben werden, bevor das Acrylnitril zugegeben worden ist.

Es wurde eine Gefrierfällung durchgeführt.

Mechanische Prüfung:

**Tabelle 1**

| Prüfung | Ergebnis |
|---|---|
| Vicat B 50 [°C] | 113,4 |
| MVR, 220 °C/10 kg [$cm^3$/10min] | 6,5 |
| Glasübergangstemperatur [°C] nach DSC | 122,0 |

(fortgesetzt)

| Prüfung | Ergebnis |
|---|---|
| Dichte [$g/cm^3$] | 1,082 |
| **Zugversuch ISO 527-2** | |
| Bruchspannung [MPa] | 46,6 |
| Bruchdehnung, nominell [%] | 8,5 |
| Streckspannung [MPa] | 66,1 |
| E-Modul [MPa] | 3053 |
| **Durchstoßtest ISO 6603-2/40/20/c** | |
| ET [J] | 0,7 |
| **Charpy ISO 179-2/1eA(F)** | |
| ak (23 °C) [$kJ/m^2$] | 4,9 |
| Standardabweichung [$kJ/m^2$] | 0,2 |
| **Charpy ISO 179-2/1eU** | |
| an (23 °C) [$kJ/m^2$] | 217,0 |
| Standardabweichung [$kJ/m^2$] | 47,0 |
| **Charpy ISO 179-2/1eA(F)** | |
| an (-30 °C) [$kJ/m^2$] | 70,6 |
| Standardabweichung [$kJ/m^2$] | 15,9 |

Bestimmung der Wasseraufnahme:

Aus der Harzzusammensetzung werden Plättchen von 60 mm x 60 mm x 2 mm für 24h bei 50 °C unter Vakuum getrocknet. Anschließend werden die Plättchen für 24h bei RT im Wasserbad eingelagert. Es werden drei Proben vermessen. Die Ergebnisse sind in Tabelle 2 dargestellt:

**Tabelle 2**

| Probe | 1 | 2 | 3 |
|---|---|---|---|
| | | | |
| Wasseraufnahme [%] | 0,38 | 0,42 | 0,45 |
| Durchschnitt [%] | | 0,42 | |
| Feuchtigkeitsaufnahme [%] (240h, 23 °C, 50% rel. Feuchte) | 0,37 | 0,37 | 0,36 |
| Durchschnitt [%] | | 0,37 | |

Beispiel 2

Harzzusammensetzung nach Beispiel 1, jedoch nur Komponente (A), Komponenten (B) und (C) sind nicht vorhanden. Es werden folgende Werte ermittelt:

Stoßfestigkeit Charpy bei 23 °C, ISO 179-2/1eA (F) = 5,1 $kJ/m^2$
Fliessfähigkeit MVR, 220°C/10 kg = 6,7 ml/10 min
Hitzebeständigkeit Vicat B = 50 = 113,3 °C
Steifheit E-Modul = 3861 MPa
Wasseraufnahme 0,37%.

Beispiel 3

Harzzusammensetzung gemäß Beispiel 1, jedoch mit verschiedenen Mengen an Pfropfkautschuken (B) und (C), ohne das Verhältnis von B zu C zu verändern.

a) Menge an Komponente (A) = 68,2%, daraus resultiert ein Vicat B = 110,2°C.
b) Menge an Komponente (A) = 74,6%, daraus resultiert ein Vicat B = 112,5°C.

Beispiel 4:

Harzzusammensetzung gemäß Beispiel 1 mit verschiedenen Verhältnissen von Pfropfkautschuken (B) und (C). Die Ergebnisse sind in Tabelle 3 dargestellt.

**Tabelle 3**

| **Versuchsnummer** | **4.1** | **4.2** | **4.3** | **4.4** | **4.5** | **4.6** | **V1** | **V2** |
|---|---|---|---|---|---|---|---|---|
| Einsatzstoff [g] | | | | | | | | |
| Komponente (A) | 89012 (80,1%) | 5000 (100%) | 5670 (81%) | 5670 (81%) | 5950 (85%) | 6300 (90%) | 5454 (77,9%) | - |
| Komponente (B) | 13200 (12%) | - | 1330 (19%) | 490 (7%) | 663 (9,5%) | 442 (6,3%) | 840 (12%) | - |
| Komponente (C) | 7788 (7,1%) | - | - | 840 (12%) | 387 (5,5%) | 258 (3,7%) | 496 (7,1%) | - |
| Ultrason S2010(1) | - | - | - | - | - | - | 210 (3%) | - |
| Makrolon® Polycarbonat | - | - | - | - | - | - | - | 7000 (100%) |
| | | | | | | | | |
| Spritztemperatur [°C] | 240/60 | 240/60 | 240/60 | 240/60 | 240/60 | 240/60 | 240/60 | 280/80 |
| **Prüfung** | | | | | | | | |
| Vicat B50 [°C] | 113,4 | 116,2 | 117,0 | 117,4 | 117,8 | 118,9 | 117,3 | 141,9 |
| MVR, 220 °C/10 kg | 6,5 | 11,3 | 5,0 | 5,3 | 5,7 | 6,5 | 5,0 | 24,97(2) |
| TG, DSC [°C] | 122,0 | - | - | - | - | - | - | - |
| Dichte [g/cm$^3$] | 1,082 | 1,091 | - | - | - | - | - | 1,192 |
| **Zugversuch, ISO 527-2** | | | | | | | | |
| Bruchspannung | 46,6 | 82,8 | 48,4 | 48,2 | 50,1 | 51,8 | 47,7 | 51,3 |
| Bruchdehnung, nominell | 8,5 | 3,0 | 9,6 | 8,3 | 8,3 | 8,2 | 8,9 | 77,2 |
| Streckspannung | 66,1 | - | 69,8 | 66,4 | 71,0 | 75,3 | 66,6 | 62,2 |
| E-Modul | 3053 | 3861 | 3071 | 3023 | 3176 | 3347 | 2947 | 2391 |
| **Durchstoss, ISO 6603-2/40/20/c** | | | | | | | | |
| ET | 0,7 | 0,5 | 0,6 | 1,0 | 0,7 | 0,6 | 0,4 | 44,9 |

(fortgesetzt)

| | | | | | | | | |
|---|---|---|---|---|---|---|---|---|
| **Charpy, ISO179-2/1eA (F)** | | | | | | | | |
| ak (23°C) | 4,9 | 1,6 | 2,0 | 6,1 | 3,0 | 2,7 | 2,9 | 11,7 |
| Standardabweichung | 0,2 | 0,3 | 0,4 | 0,6 | 0,1 | 0,3 | 0,0 | 0,8 |
| **Charpy, ISO179-2/1eU** | | | | | | | | |
| an (23°C) | 217,0 | 25,9 | 41,2 | 186,0 | 74,3 | 42,6 | 120,0 | (3) |
| Standardabweichung | 47,0 | 1,0 | 4,2 | 63,0 | 14,9 | 6,2 | 63,0 | - |
| **Charpy, ISO1T9-2/1eU** | | | | | | | | |
| an (-30°C) | 70,6 | 28,2 | 36,3 | 85,7 | 51,7 | 35,9 | 55,7 | (3) |
| Standardabweichung | 15,9 | 1,1 | 1,1 | 15,5 | 8,8 | 3,2 | 9,3 | - |
| [1] Polysulfonsäure-Kondensat mit hohem Molekulargewicht<br>[2] bei 250 °C/2,16 kg<br>[3] kein Bruch | | | | | | | | |

Beispiel 5

Harzzusammensetzung gemäß Beispiel 1, jedoch ist der Pfropfkautschuk mit $MgSO_4$-Lösung koaguliert, anstelle der Verwendung einer Gefrierfällung. Es werden folgende Werte ermittelt:

| | |
|---|---|
| Stoßfestigkeit | Charpy bei 23°C, ISO 179-2/1eA (F) = 5,1 kJ/m$^2$ |
| Fliessfähigkeit | MVR, 220°C/10 kg = 6,7 ml/10 min |
| Hitzebeständigkeit | Vicat B = 50 = 113,3 °C |
| Steifheit | E-Modul = 3861 MPa |
| Wasseraufnahme | 0,37%. |

Beispiel 6

Die erfindungsgemäße Komponente (A) wird mit einem Styrol-Butadiencopolymer (Styrolux® BX6401) vermischt. Dabei wird kein guter Charpy, d.h. < 1,5 kJ/m$^2$, gemessen. Wasser und Feuchtigkeitsaufnahme werden nicht gemessen.

Beispiel 7

Harzzusammensetzung enthaltend Komponente (A) aus Beispiel 1 mit verschiedenen Anteilen eines Ethylen-n-butylacrylat-glycidyl-methacrylat-copolymer (Elvaloy® PTW). Wie in Beispiel 6 wird kein guter Charpy, d. h. < 1,5 kJ/m$^2$, erhalten. Wasser und Feuchtigkeitsaufnahme werden nicht gemessen.

Beispiel 8

Komponente (A) wird mit verschiedenen Gewichtsanteilen eines hochstoßfesten Polystyrolharzes (PF 486 M, HIPS) vermischt. Es wird ein sehr brüchiges Material erhalten, so dass Charpy nicht getestet werden kann. Die Wasseraufnahme beträgt > 0,6%.

Beispiel 9

Komponente (A) aus Beispiel 1 wird mit einem SAN gepfropften Polybutadien-Pfropfkautschuk vermischt. Es wird ein sehr brüchiges Material erhalten, so dass der Charpy nicht ermittelt werden kann. Die Wasseraufnahme beträgt > 0,77%.

Beispiel 10

Aus der Harzzusammensetzung gemäß Beispiel 1 wird eine BluRay Disc hergestellt. Die Abformung der Oberfläche mit Strukturen im Nanometerbereich dieser Disc beträgt 95% oder besser. Eine entsprechende Disc aus Polycarbonat zeigt ebenfalls eine Abformung von ≥ 95%. Auch die Ebenheit der aus der Harzzusammensetzung gemäß Beispiel 1 hergestellten BluRay Disc ist in tangentialer und radialer Richtung mit der Disc aus Polycarbonat vergleichbar. Die erfindungsgemäße BluRay Disc ist somit bezüglich Oberflächenabformung und Ebenheit genau so gut wie Polycarbonat Disc des Standes der Technik.

Die erfindungsgemäßen Harzzusammensetzungen weisen ein vorteilhaftes elektrostatisches Verhalten auf. Dies kann durch gute Werte im Corona-Test gezeigt werden. Die nachfolgende Tabelle 4 zeigt den Kennwert der statischen Aufladung der Proben, wobei gilt:

$$\text{Kennwert} = \log (E_G * t(h)) \text{ mit } E_G = | E(0) - \text{Vorladung} |,\ t(h) \text{ Halbwertszeit}$$

**Tabelle 4. Kennwerte der statischen Aufladung**

| Probenbezeichnung | Kennwerte nach 2 Tagen in NK23/50 | | | | | |
|---|---|---|---|---|---|---|
| | Kennwert | t(h)[s] | ΔE [%] | Vorl.[V/cm] | E(0)[V/cm] | $Ro_A$[Ω] |
| Versuch 4.1 | >5,8 | >900 | 24 | -126 | -929 | >1E14 |
| Versuch V3 | >6,1 | >900 | 45 | 12 | -1280 | >1E14 |
| Versuch V2 | >6,2 | >900 | 20 | 303 | -1332 | >1E14 |

Versuch V3 ist eine Probe eines kommerziell erhältlichen Polymeren gemäß dem Stand der Technik. NK 23/50 bedeutet Konditionierung bei 23 °C und einer relativen Luftfeuchtigkeit von 50%.

Als orientierende Klassifizierung kann folgende Einteilung dienen:

Kennwert 0 bis 3: antistatisches Verhalten
Kennwert 4 bis 6: verringerte Aufladungsneigung
Kennwert 7 bis 9: hohe Aufladungsneigung

## Patentansprüche

1. Harzzusammensetzung, umfassend

(A) 60 bis 95 Gew-% eines Copolymers enthaltend als Grundbausteine wenigstens ein α,β-ungesättigtes Monocarbonsäurenitril und wenigstens ein aromatisches Vinylmonomer als Komponente (A),
(B) 5 bis 20 Gew.-% eines Pfropfkautschuks enthaltend eine Pfropfgrundlage b1 aufgebaut aus wenigstens einem α,β-ungesättigten Mono-carbonsäureester mit einer mittleren Teilchengröße von 60 bis 120 nm und mindestens eine Pfropfschale b2 aufgebaut aus wenigstens einem aromatischen Vinylmonomer und wenigstens einem α,β-ungesättigten Monocarbonsäurenitril als Komponente (B),
(C) 2 bis 15 Gew.-% eines Pfropfkautschuks enthaltend eine Pfropfgrundlage c1 aufgebaut aus wenigstens einem α,β-ungesättigten Monocarbonsäureester mit einer mittleren Teilchengröße von 300 bis 600 nm und mindestes eine Pfropfschale c2 aufgebaut aus wenigstens einem aromatischen Vinylpolymer und wenigstens einem α,β-ungesättigten Monocarbonsäurenitril als Komponente (C) und
(D) 0 bis 10 Gew.-% Farbstoffe, Pigmente, Färbemittel, Antistatika, Antioxidantien, Stabilisatoren zur Verbesserung der Thermostabilität, Stabilisatoren zur Erhöhung der Lichtstabilität, Stabilisatoren zum Anheben der Hydrolysebeständigkeit und der Chemikalienbeständigkeit, Mittel gegen die Wärmezersetzung und/oder Schmier-/Gleitmittel, die für die Herstellung von Formkörpern bzw. Formteilen zweckmäßig sind als Komponente (D),

wobei die Summe der Mengen der Komponenten (A), (B), (C) und (D) 100 Gew.-% beträgt.

2. Harzzusammensetzung nach Anspruch 1, **dadurch gekennzeichnet, dass** Komponente (A) als α,β-ungesättigtes Monocarbonsäurenitril Acrylnitril und als aromatisches Vinylmonomer α-Methylstyrol enthält.

3. Harzzusammensetzung nach Anspruch 1 oder 2, **dadurch gekennzeichnet, dass** in Komponenten (B) und (C) der α,β-ungesättigten Monocarbonsäureester ein Acrylsäure- oder Methacrylsäurealkylester abgeleitet von einem Alkohol mit 1 bis 8 Kohlenstoffatomen ist.

4. Harzzusammensetzung nach einem der Ansprüche 1 bis 3, **dadurch gekennzeichnet, dass** in Komponenten (B) und (C) das aromatische Vinylmonomer Styrol ist.

5. Harzzusammensetzung nach einem der Ansprüche 1 bis 4, **dadurch gekennzeichnet, dass** in Komponenten (B) und (C) das α,β-ungesättigte Monocarbonsäurenitril Acrylnitril ist.

6. Harzzusammensetzung nach einem der Ansprüche 1 bis 5, **dadurch gekennzeichnet, dass** Komponente (A) zu 68 bis 88 Gew.%, Komponente (B) zu 7 bis 16 Gew.-% und Komponente (C) zu 4 bis 12 Gew.% vorliegen, wobei die Summe der Mengen der Komponenten (A) bis (C) 100 Gew.% beträgt.

7. Harzzusammensetzung nach einem der Ansprüche 1 bis 6, **dadurch gekennzeichnet, dass** die in Komponente (B) eingesetzte Pfropfgrundlage b1 einen Quellungsindex von 5 bis 25 aufweist.

8. Harzzusammensetzung nach einem der Ansprüche 1 bis 7, **dadurch gekennzeichnet, dass** die in Komponente (B) eingesetzte Pfropfgrundlage b1 einen Gelgehalt von mehr als 80% aufweist.

9. Harzzusammensetzung nach einem der Ansprüche 1 bis 8, **dadurch gekennzeichnet, dass** die in Komponente (C) eingesetzte Pfropfgrundlage c1 einen Quellungsindex von 5 bis 25 aufweist.

10. Harzzusammensetzung nach einem der Ansprüche 1 bis 9, **dadurch gekennzeichnet, dass** die in Komponente (C) eingesetzte Pfropfgrundlage c1 einen Gelgehalt von mehr als 80% aufweist.

11. Medium zur optischen Aufzeichnung von Daten, enthaltend eine Harzzusammensetzung umfassend

(A) 60 bis 95 Gew.-% eines Copolymers enthaltend als Grundbausteine wenigstens ein α,β-ungesättigtes Monocarbonsäurenitril und wenigstens ein aromatisches Vinylmonomer als Komponente (A),
(B) 5 bis 20 Gew.-% eines Pfropfkautschuks enthaltend eine Pfropfgrundlage b1 aufgebaut aus wenigstens einem α,β-ungesättigten Monocarbonsäureester mit einer mittleren Teilchengröße von 50 bis 150 nm und mindestens eine Pfropfschale b2 aufgebaut aus wenigstens einem aromatischen Vinylmonomer und wenigstens einem α,β-ungesättigten Monocarbonsäurenitril als Komponente (B),
(C) 2 bis 15 Gew.-% eines Pfropfkautschuks enthaltend eine Pfropfgrundlage c1 aufgebaut aus wenigstens einem α,β-ungesättigten Monocarbonsäureester mit einer mittleren Teilchengröße von 300 bis 600 nm und mindestes eine Pfropfschale c2 aufgebaut aus wenigstens einem aromatischen Vinylpolymer und wenigstens einem α,β-ungesättigten Monocarbonsäurenitril als Komponente (C) und
(D) 0 bis 10 Gew.-% Additive als Komponente (D),

wobei die Summe der Mengen der Komponenten (A), (B), (C) und (D) 100 Gew.% beträgt.

12. Medium nach Anspruch 11, **dadurch gekennzeichnet, dass** es eine BluRay Disc ist.

13. Verwendung einer Harzzusammensetzung umfassend

(A) 60 bis 95 Gew.-% eines Copolymers enthaltend als Grundbausteine wenigstens ein α,β-ungesättigtes Monocarbonsäurenitril und wenigstens ein aromatisches Vinylmonomer als Komponente (A),
(B) 5 bis 20 Gew.-% eines Pfropfkautschuks enthaltend eine Pfropfgrundlage b1 aufgebaut aus wenigstens einem α,β-ungesättigten Monocarbonsäureester mit einer mittleren Teilchengröße von 50 bis 150 nm und mindestens eine Pfropfschale b2 aufgebaut aus wenigstens einem aromatischen Vinylmonomer und wenigstens einem α,β-ungesättigten Monocarbonsäurenitril als Komponente (B),
(C) 2 bis 15 Gew.-% eines Pfropfkautschuks enthaltend eine Pfropfgrundlage c1 aufgebaut aus wenigstens einem α,β-ungesättigten Monocarbonsäureester mit einer mittleren Teilchengröße von 300 bis 600 nm und mindestes eine Pfropfschale c2 aufgebaut aus wenigstens einem aromatischen Vinylpolymer und wenigstens

einem α,β-ungesättigten Monocarbonsäurenitril als Komponente (C) und
(D) 0 bis 10 Gew.-% Additive als Komponente (D),

wobei die Summe der Mengen der Komponenten (A), (B), (C) und (D) 100 Gew.% beträgt zur Herstellung von Medien zur optischen Aufzeichnung von Daten.

**14.** Verfahren zur Herstellung eines Mediums nach Anspruch 11, **dadurch gekennzeichnet, dass** eine Harzzusammensetzung umfassend

(A) 60 bis 95 Gew.-% eines Copolymers enthaltend als Grundbausteine wenigstens ein α,β-ungesättigtes Monocarbonsäurenitril und wenigstens ein aromatisches Vinylmonomer als Komponente (A),
(B) 5 bis 20 Gew.-% eines Pfropfkautschuks enthaltend eine Pfropfgrundlage b1 aufgebaut aus wenigstens einem α,β-ungesättigten Monocarbonsäureester mit einer mittleren Teilchengröße von 50 bis 150 nm und mindestens eine Pfropfschale b2 aufgebaut aus wenigstens einem aromatischen Vinylmonomer und wenigstens einem α,β-ungesättigten Monocarbonsäurenitril als Komponente (B),
(C) 2 bis 15 Gew.-% eines Pfropfkautschuks enthaltend eine Pfropfgrundlage c1 aufgebaut aus wenigstens einem α,β-ungesättigten Monocarbonsäureester mit einer mittleren Teilchengröße von 300 bis 600 nm und mindestes eine Pfropfschale c2 aufgebaut aus wenigstens einem aromatischen Vinylpolymer und wenigstens einem α,β-ungesättigten Monocarbonsäurenitril als Komponente (C) und
(D) 0 bis 10 Gew.-% Additive als Komponente (D),

wobei die Summe der Mengen der Komponenten (A), (B), (C) und (D) 100 Gew.% beträgt zu einem solchen Medium geformt wird.

## Claims

**1.** A resin composition comprising

(A) 60 to 95% by weight of a copolymer comprising, as base units, at least one α,β-unsaturated monocarbonitrile and at least one aromatic vinyl monomer as component (A),
(B) 5 to 20% by weight of a graft rubber comprising a graft base b1 formed from at least one α,β-unsaturated monocarboxylic ester having a mean particle size of 60 to 120 nm and at least one graft shell b2 formed from at least one aromatic vinyl monomer and at least one α,β-unsaturated monocarbonitrile as component (B),
(C) 2 to 15 % by weight of a graft rubber comprising a graft base c1 formed from at least one α,β-unsaturated monocarboxylic ester having a mean particle size of 300 to 600 nm and at least one graft shell c2 formed from at least one aromatic vinyl polymer and at least one α,β-unsaturated monocarbonitrile as component (C) and
(D) 0 to 10% by weight of dyes, pigments, colorants, antistats, antioxidants, stabilizers for improving thermal stability, stabilizers for increasing light stability, stabilizers for raising hydrolysis resistance and chemical resistance, agents to counter thermal decomposition and/or lubricants which are appropriate for the production of shaped bodies or moldings as component (D),

where the sum of the amounts of components (A), (B), (C) and (D) is 100% by weight.

**2.** The resin composition according to claim 1, wherein component (A) comprises acrylonitrile as the α,β-unsaturated monocarbonitrile and α-methylstyrene as the aromatic vinyl monomer.

**3.** The resin composition according to claim 1 or 2, wherein the α,β-unsaturated monocarboxylic ester in components (B) and (C) is an alkyl acrylate or alkyl methacrylate derived from an alcohol having 1 to 8 carbon atoms.

**4.** The resin composition according to any of claims 1 to 3, wherein the aromatic vinyl monomer in components (B) and (C) is styrene.

**5.** The resin composition according to any of claims 1 to 4, wherein the α,β-unsaturated monocarbonitrile in components (B) and (C) is acrylonitrile.

**6.** The resin composition according to any of claims 1 to 5, wherein component (A) is present to an extent of 68 to 88% by weight, component (B) to an extent of 7 to 16% by weight and component (C) to an extent of 4 to 12% by

weight, where the sum of the amounts of components (A) to (C) is 100% by weight.

**7.** The resin composition according to any of claims 1 to 6, wherein the graft base b1 used in component (B) has a swelling index of 5 to 25.

**8.** The resin composition according to any of claims 1 to 7, wherein the graft base b1 used in component (B) has a gel content of more than 80%.

**9.** The resin composition according to any of claims 1 to 8, wherein the graft base b1 used in component (C) has a swelling index of 5 to 25.

**10.** The resin composition according to any of claims 1 to 9, wherein the graft base c1 used in component (C) has a gel content of more than 80%.

**11.** A medium for optical recording of data, comprising a resin composition comprising

(A) 60 to 95% by weight of a copolymer comprising, as base units, at least one α,β-unsaturated monocarbonitrile and at least one aromatic vinyl monomer as component (A),
(B) 5 to 20% by weight of a graft rubber comprising a graft base b1 formed from at least one α,β-unsaturated monocarboxylic ester having a mean particle size of 50 to 150 nm and at least one graft shell b2 formed from at least one aromatic vinyl monomer and at least one α,β-unsaturated monocarbonitrile as component (B),
(C) 2 to 15 % by weight of a graft rubber comprising a graft base c1 formed from at least one α,β-unsaturated monocarboxylic ester having a mean particle size of 300 to 600 nm and at least one graft shell c2 formed from at least one aromatic vinyl polymer and at least one α,β-unsaturated monocarbonitrile as component (C) and
(D) 0 to 10% by weight of additives as component (D),

where the sum of the amounts of components (A), (B), (C) and (D) is 100% by weight.

**12.** The medium according to claim 11, which is a BluRay disc.

**13.** The use of a resin composition comprising

(A) 60 to 95% by weight of a copolymer comprising, as base units, at least one α,β-unsaturated monocarbonitrile and at least one aromatic vinyl monomer as component (A),
(B) 5 to 20% by weight of a graft rubber comprising a graft base b1 formed from at least one α,β-unsaturated monocarboxylic ester having a mean particle size of 50 to 150 nm and at least one graft shell b2 formed from at least one aromatic vinyl monomer and at least one α,β-unsaturated monocarbonitrile as component (B),
(C) 2 to 15 % by weight of a graft rubber comprising a graft base c1 formed from at least one α,β-unsaturated monocarboxylic ester having a mean particle size of 300 to 600 nm and at least one graft shell c2 formed from at least one aromatic vinyl polymer and at least one α,β-unsaturated monocarbonitrile as component (C) and
(D) 0 to 10% by weight of additives as component (D),

where the sum of the amounts of components (A), (B), (C) and (D) is 100% by weight, for production of media for optical recording of data.

**14.** A process for producing a medium according to claim 11, which comprises shaping a resin composition comprising

(A) 60 to 95% by weight of a copolymer comprising, as base units, at least one α,β-unsaturated monocarbonitrile and at least one aromatic vinyl monomer as component (A),
(B) 5 to 20% by weight of a graft rubber comprising a graft base b1 formed from at least one α,β-unsaturated monocarboxylic ester having a mean particle size of 50 to 150 nm and at least one graft shell b2 formed from at least one aromatic vinyl monomer and at least one α,β-unsaturated monocarbonitrile as component (B),
(C) 2 to 15 % by weight of a graft rubber comprising a graft base c1 formed from at least one α,β-unsaturated monocarboxylic ester having a mean particle size of 300 to 600 nm and at least one graft shell c2 formed from at least one aromatic vinyl polymer and at least one α,β-unsaturated monocarbonitrile as component (C) and
(D) 0 to 10% by weight of additives as component (D),

where the sum of the amounts of components (A), (B), (C) and (D) is 100% by weight, to form such a medium.

## Revendications

**1.** Composition de résine, comprenant

(A) en tant que composant (A), 60 à 95 % en poids d'un copolymère contenant en tant que constituants de base au moins un monocarbonitrile $\alpha,\beta$-insaturé et au moins un monomère vinylique aromatique,
(B) en tant que composant (B), 5 à 20 % en poids d'un caoutchouc greffé contenant une base de greffage b1 constituée d'au moins un ester d'un acide monocarboxylique $\alpha,\beta$-insaturé ayant une granulométrie moyenne de 60 à 120 nm, et une gaine de greffage b2, constituée d'au moins un monomère vinylique aromatique et d'au moins un monocarbonitrile $\alpha,\beta$-insaturé,
(C) en tant que composant (C), 2 à 15 % en poids d'un caoutchouc greffé contenant une base de greffage c1 constituée d'au moins un ester d'un acide monocarboxylique $\alpha,\beta$-insaturé ayant une granulométrie moyenne de 300 à 600 nm et au moins une gaine de greffage c2 constituée d'au moins un polymère vinylique aromatique et d'au moins un monocarbonitrile $\alpha,\beta$-insaturé, et
(D) en tant que composant (D), 0 à 10 % en poids d'additifs,

la somme des quantités des composants (A), (B), (C) et (D) étant de 100 % en poids.

**2.** Composition de résine selon la revendication 1, **caractérisée en ce que** le composant (A) contient de l'acrylonitrile en tant que monocarbonitrile $\alpha,\beta$-insaturé, et de l'$\alpha$-méthylstyrène en tant que monomère vinylique aromatique.

**3.** Composition de résine selon la revendication 1 ou 2, **caractérisée en ce que**, dans les composants (B) et (C), l'ester d'un acide monocarboxylique $\alpha,\beta$-insaturé est un ester alkylique de l'acide acrylique ou de l'acide méthacrylique, dérivant d'un alcool ayant 1 à 8 atomes de carbone.

**4.** Composition de résine selon l'une des revendications 1 à 3, **caractérisée en ce que**, dans les composants (B) et (C), le monomère vinylique aromatique est le styrène.

**5.** Composition de résine selon l'une des revendications 1 à 4, **caractérisée en ce que**, dans les composants (B) et (C), le monocarbonitrile $\alpha,\beta$-insaturé est l'acrylonitrile.

**6.** Composition de résine selon l'une des revendications 1 à 5, **caractérisée en ce que** le composant (A) est présent en une quantité de 68 à 88 % en poids, le composant (B) en une quantité de 7 à 16 % en poids et le composant (C) en une quantité de 4 à 12 % en poids, la somme des quantités des composants (A) à (C) étant de 100 % en poids.

**7.** Composition de résine selon l'une des revendications 1 à 6, **caractérisée en ce que** la base de greffage b1 utilisée dans le composant (B) a un indice de gonflement de 5 à 25.

**8.** Composition de résine selon l'une des revendications 1 à 7, **caractérisée en ce que** la base de greffage b1 utilisée dans le composant (B) a une teneur en gel supérieure à 80 %.

**9.** Composition de résine selon l'une des revendications 1 à 8, **caractérisée en ce que** la base de greffage c1 utilisée dans le composant (C) a un indice de gonflement de 5 à 25.

**10.** Composition de résine selon l'une des revendications 1 à 9, **caractérisée en ce que** la base de greffage c1 utilisée dans le composant (C) a une teneur en gel supérieure à 80 %.

**11.** Support pour l'enregistrement optique de données, contenant une composition de résine comprenant

(A) en tant que composant (A), 60 à 95 % en poids d'un copolymère contenant en tant que constituants de base au moins un monocarbonitrile $\alpha,\beta$-insaturé et au moins un monomère vinylique aromatique,
(B) en tant que composant (B), 5 à 20 % en poids d'un caoutchouc greffé contenant une base de greffage b1 constituée d'au moins un ester d'un acide monocarboxylique $\alpha,\beta$-insaturé ayant une granulométrie moyenne de 50 à 150 nm, et une gaine de greffage b2, constituée d'au moins un monomère vinylique aromatique et d'au moins un monocarbonitrile $\alpha,\beta$-insaturé,
(C) en tant que composant (C), 2 à 15 % en poids d'un caoutchouc greffé contenant une base de greffage c1 constituée d'au moins un ester d'un acide monocarboxylique $\alpha,\beta$-insaturé ayant une granulométrie moyenne de 300 à 600 nm et au moins une gaine de greffage c2 constituée d'au moins un polymère vinylique aromatique

et d'au moins un monocarbonitrile α,β-insaturé, et
(D) en tant que composant (D), 0 à 10 % en poids d'additifs,

la somme des quantités des composants (A), (B), (C) et (D) étant de 100 % en poids.

**12.** Support selon la revendication 11, **caractérisé en ce qu'**il s'agit d'un disque BluRay.

**13.** Utilisation d'une composition de résine pour la fabrication de supports pour l'enregistrement optique de données comprenant

(A) en tant que composant (A), 60 à 95 % en poids d'un copolymère contenant en tant que constituants de base au moins un monocarbonitrile α,β-insaturé et au moins un monomère vinylique aromatique,
(B) en tant que composant (B), 5 à 20 % en poids d'un caoutchouc greffé contenant une base de greffage b1 constituée d'au moins un ester d'un acide monocarboxylique α,β-insaturé ayant une granulométrie moyenne de 50 à 150 nm, et une gaine de greffage b2, constituée d'au moins un monomère vinylique aromatique et d'au moins un monocarbonitrile α,β-insaturé,
(C) en tant que composant (C), 2 à 15 % en poids d'un caoutchouc greffé contenant une base de greffage c1 constituée d'au moins un ester d'un acide monocarboxylique α,β-insaturé ayant une granulométrie moyenne de 300 à 600 nm et au moins une gaine de greffage c2 constituée d'au moins un polymère vinylique aromatique et d'au moins un monocarbonitrile α,β-insaturé, et
(D) en tant que composant (D), 0 à 10 % en poids d'additifs,

la somme des quantités des composants (A), (B), (C) et (D) étant de 100 % en poids.

**14.** Procédé de fabrication d'un support selon la revendication 11, **caractérisé en ce qu'**une composition de résine est façonnée pour donner un tel support, ladite composition comprenant

(A) en tant que composant (A), 60 à 95 % en poids d'un copolymère contenant en tant que constituants de base au moins un monocarbonitrile α,β-insaturé et au moins un monomère vinylique aromatique,
(B) en tant que composant (B), 5 à 20 % en poids d'un caoutchouc greffé contenant une base de greffage b1 constituée d'au moins un ester d'un acide monocarboxylique α,β-insaturé ayant une granulométrie moyenne de 50 à 150 nm, et une gaine de greffage b2, constituée d'au moins un monomère vinylique aromatique et d'au moins un monocarbonitrile α,β-insaturé,
(C) en tant que composant (C), 2 à 15 % en poids d'un caoutchouc greffé contenant une base de greffage c1 constituée d'au moins un ester d'un acide monocarboxylique α,β-insaturé ayant une granulométrie moyenne de 300 à 600 nm et au moins une gaine de greffage c2 constituée d'au moins un polymère vinylique aromatique et d'au moins un monocarbonitrile α,β-insaturé, et
(D) en tant que composant (D), 0 à 10 % en poids d'additifs,

la somme des quantités des composants (A), (B), (C) et (D) étant de 100 % en poids.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2006003666 A2
- WO 2003037983 A3
- WO 03102110 A1
- WO 2003102110 A1
- DE 1260135 A
- WO 200210222 A
- DE 2826925 A
- EP 022200 A
- US 2520959 A
- US 3397165 A
- WO 200130901 A
- WO 200228931 A
- EP 1191044 A
- EP 1305345 A
- EP 029613 A
- EP 007810 A
- DE 1233131 A
- DE 1258076 A
- DE 2101650 A
- DE OS1260135 A
- DE 19907136 A


### In der Beschreibung aufgeführte Nicht-Patentliteratur


- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- Analytische Ultrazentrifuge (AUC) in Biochemistry and Polymer Science. Royal Society of Chemistry, 1992, 1447-1475
- Plastics Additives Handbook. Hanser Publ, 1996